# EUROPEAN PATENT APPLICATION

(11) **EP 4 832 381 A1**
(43) Date of publication of application: **28.10.2026**
(21) Application number: 25741448.2
(22) Date of filing: 13.01.2025
(51) Int. Cl.: H04J 3/06

(54) **PTP MESSAGE PROCESSING METHOD, SENDING METHOD, COMMUNICATION SYSTEM, AND APPARATUS**

(30) Priority: 18.01.2024 CN 202410080065
(71) Applicant: Huawei Technologies Co., Ltd., Shenzhen, Guangdong 518129 (CN)
(72) Inventor: LI, Rixin, Shenzhen, Guangdong 518129 (CN); LYU, Jingfei, Shenzhen, Guangdong 518129 (CN); HU, Yongjian, Shenzhen, Guangdong 518129 (CN); XUE, Wei, Shenzhen, Guangdong 518129 (CN)
(74) Representative: Goddar, Heinz J.
(86) International application number: PCT/CN2025/071997
(87) International publication number: WO 2025/152886

(57) **Abstract**

This application discloses a method and an apparatus for processing a PTP message, a method and an apparatus for sending a PTP message, and a communication system, belonging to the field of communication technologies. In this method, an identifier in a PTP message indicates whether the PTP message is a delay measurement function message. A communication apparatus that receives the PTP message can process the PTP message based on the indication of the identifier. Because the communication apparatus can process delay measurement function messages, the communication apparatus is thereby enabled to support the delay measurement function.

## Description

This application claims priority to Chinese Patent Application No. 202410080065.5, filed on January 18, 2024 and entitled "METHOD AND APPARATUS FOR PROCESSING PTP MESSAGE, METHOD AND APPARATUS FOR SENDING PTP MESSAGE, AND COMMUNICATION SYSTEM", which is incorporated herein by reference in its entirety.

### TECHNICAL FIELD

This application relates to the field of communication technologies, and in particular, to a method and an apparatus for processing a PTP message, a method and an apparatus for sending a PTP message, and a communication system.

### BACKGROUND

With the development of the 4th generation mobile communication technology (4th Generation mobile communication technology, 4G) and the 5th generation mobile communication technology (5th Generation mobile communication technology, 5G), communication networks impose increasingly stringent requirements on time synchronization. Therefore, time synchronization needs to be performed on communication networks. The precision time protocol (precision time protocol, PTP) is a technology for synchronizing time across standard Ethernet devices. It is also referred to as the institute of electrical and electronics engineers (Institute of Electrical and Electronics Engineers, IEEE) 1588 synchronization technology, or simply 1588 synchronization.

Currently, in a communication network that supports the PTP protocol, different communication apparatuses in the communication network may perform time synchronization by exchanging PTP messages. For example, assume that a communication apparatus 1 is a master clock device for a communication apparatus 2, and the communication apparatus 2 is a slave clock device for the communication apparatus 1. The communication apparatus 1 sends a PTP message to the communication apparatus 2, and the communication apparatus 2 synchronizes its time with the communication apparatus 1 based on the PTP message.

### SUMMARY

This application provides a method and an apparatus for processing a PTP message, a method and an apparatus for sending a PTP message, and a communication system, enabling communication apparatuses to support delay measurement based on the PTP protocol. Technical solutions are as follows.

According to a first aspect, a method for processing a PTP message is provided. The method is performed by a communication apparatus (referred to as a first communication apparatus) in a communication system that supports a PTP protocol, and the method includes: first obtaining a PTP message from another communication apparatus (referred to as a second communication apparatus), and processing the PTP message based on an identifier in the PTP message, where the identifier indicates whether the PTP message is a delay measurement function message.

In the method, an identifier in a PTP message indicates whether the PTP message is a delay measurement function message. A communication apparatus that receives the PTP message can process the PTP message based on the indication of the identifier. Because the communication apparatus can process delay measurement function messages, the communication apparatus is thereby enabled to support the delay measurement function.

In a possible implementation, when the first communication apparatus is a service bearing apparatus, the processing the PTP message based on the identifier includes: if the identifier indicates that the PTP message is not a delay measurement function message, terminating the PTP message; or if the identifier indicates that the PTP message is a delay measurement function message, sending the PTP message.

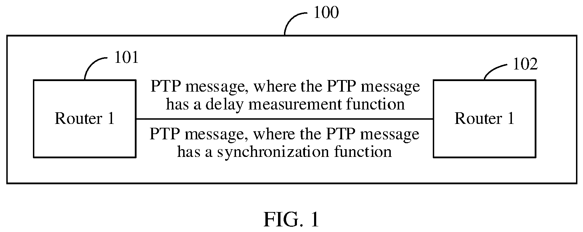

Based on the possible implementation, the service bearing apparatus in the communication system sends the received delay measurement function message, so that the delay measurement function message can be sent to a non-service bearing apparatus in a communication network, and the non-service bearing apparatus performs delay measurement based on the delay measurement function message. The non-service bearing apparatus is a communication apparatus that is not a service bearing apparatus in the communication network, for example, a communication apparatus 101 and a communication apparatus 102 in FIG. 1 to FIG. 3.

In a possible implementation, when the first communication apparatus is not a service bearing apparatus, the processing the PTP message based on the identifier includes: if the identifier indicates that the PTP message is not a delay measurement function message, terminating the PTP message; or if the identifier indicates that the PTP message is a delay measurement function message, performing delay measurement based on the PTP message.

Based on the possible implementation, a non-service bearing apparatus in the communication system can perform delay measurement by using the PTP message.

In a possible implementation, the PTP message is a synchronization message that is involved in a delay request-response mechanism and includes the identifier. Based on this, the step of performing delay measurement based on the PTP message includes: first sending a first delay measurement request message in response to the PTP message, then obtaining a first delay measurement response message to the first delay measurement request message, and then determining a link transmission delay between the first communication apparatus and the second communication apparatus based on a timestamp of the PTP message and/or a timestamp of the first delay measurement request message, where the first delay measurement request message is a delay request message that is involved in the delay request-response mechanism and includes the identifier, the first delay measurement response message is a delay response message that is involved in the delay request-response mechanism and includes the identifier, and the first delay measurement response message includes the timestamp of the first delay measurement request message.

Based on the possible implementation, the link transmission delay between the first communication apparatus and the second communication apparatus can be measured.

In a possible implementation, before the sending the first delay measurement request message in response to the PTP message, the method further includes: obtaining a delay measurement follow-up message for the PTP, where the delay measurement follow-up message is a follow-up message that is involved in the delay request-response mechanism and includes the identifier, and the delay measurement follow-up message includes the timestamp of the PTP message.

Based on the possible implementation, the first communication apparatus may obtain the timestamp of the PTP message, so that the first communication apparatus measures the link transmission delay between the first communication apparatus and the second communication apparatus based on the timestamp of the PTP message.

In a possible implementation, the PTP message is a delay request message that is involved in a peer-to-peer delay mechanism and includes the identifier. Based on this, the step of performing delay measurement based on the PTP message includes: sending a second delay measurement response message in response to the PTP message, where the second delay measurement response message is a delay response message that is involved in the peer-to-peer delay mechanism and includes the identifier.

Based on the possible implementation, an apparatus that performs delay measurement based on the PTP message can measure the link transmission delay between the first communication apparatus and the second communication apparatus based on a timestamp of the second delay measurement response message and/or the timestamp of the PTP message.

In a possible implementation, after the sending the second delay measurement response message, the method includes:
sending a delay measurement response follow-up message for the second delay measurement response message, where the delay measurement response follow-up message is a delay response follow-up message that is involved in the peer-to-peer delay mechanism and includes the identifier, and the delay measurement response follow-up message includes the timestamp of the second delay measurement response message.

Based on the possible implementation, the apparatus that performs delay measurement based on the PTP message may obtain the timestamp of the second delay measurement response message, so that the apparatus can measure the link transmission delay between the first communication apparatus and the second communication apparatus based on the timestamp of the PTP message and/or the timestamp of the second delay measurement response message.

In a possible implementation, the PTP message includes a domain number field, a message type field, and a flag field, and the identifier is located in any one of the domain number field, the message type field, or the flag field.

In a possible implementation, the PTP message includes a message type field and a plurality of timestamp fields, the identifier is located in the message type field, the plurality of timestamp fields correspond to different delay measurement function messages, and each timestamp field is used to store a timestamp of a corresponding delay measurement function message.

In a possible implementation, the PTP message includes a domain number field, a message type field, and a flag field, the identifier includes a first sub-identifier and a second sub-identifier, and the first sub-identifier and the second sub-identifier are located in different ones of the domain number field, the message type field, and the flag field; and if either the first sub-identifier or the second sub-identifier is located in the domain number field, the sub-identifier indicates whether the PTP message is a delay measurement function message; if either the first sub-identifier or the second sub-identifier is located in the message type field, the sub-identifier indicates a message type of the PTP message and indicates that the PTP message is a delay measurement function message; or if either the first sub-identifier or the second sub-identifier is located in the flag field, the sub-identifier indicates whether the PTP message is a delay measurement function message.

In a possible implementation, the PTP message includes a domain number field, a message type field, and a flag field, and the identifier includes a first sub-identifier, a second sub-identifier, and a third sub-identifier; the first sub-identifier is located in the domain number field, and the first sub-identifier indicates whether the PTP message is a delay measurement function message; the second sub-identifier is located in the message type field, and the second sub-identifier indicates a message type of the PTP message and indicates that the PTP message is a delay measurement function message; and the third sub-identifier is located in the flag field, and the third sub-identifier indicates whether the PTP message is a delay measurement function message.

In a possible implementation, the PTP message includes a delay measurement type length value TLV, and the identifier is located in a type field in the delay measurement TLV.

In a possible implementation, the delay measurement TLV is a reserved TLV or a vendor TLV supported by the PTP message.

Based on the foregoing plurality of possible implementations, a plurality of cases in which the PTP message carries the identifier are provided, to meet requirements of a plurality of application scenarios.

In a possible implementation, the identifier is a reserved value of the field in which the identifier is located.

Based on the possible implementation, the identifier cannot occupy an occupied value of the field in which the identifier is located, and a communication apparatus that receives the PTP message does not mistakenly consider the PTP message as another message indicated by the occupied value of the field, so that the apparatus can perform delay measurement based on the identifier.

According to a second aspect, a method for sending a PTP message is provided. The method is performed by a second communication apparatus, and the method includes: first obtaining a PTP message, and then sending the PTP message, where the PTP message includes an identifier, and the identifier indicates whether the PTP message is a delay measurement function message.

In a possible implementation, the identifier indicates that the PTP message is a delay measurement function message, and the PTP message is a synchronization message that is involved in a delay request-response mechanism and includes the identifier. Based on this, after the sending the PTP message, the method further includes: obtaining a first delay measurement request message for the PTP message, and sending a second delay measurement response message in response to the first delay measurement request message, where the first delay measurement request message is a delay request message that is involved in the delay request-response mechanism and includes the identifier, and the second delay measurement response message is a delay response message that is involved in the delay request-response mechanism and includes the identifier.

In a possible implementation, after the sending the PTP message, the method further includes: sending a delay measurement follow-up message for the delay measurement synchronization message, where the delay measurement follow-up message is a follow-up message that is involved in the delay request-response mechanism and includes the identifier.

In a possible implementation, the identifier indicates that the PTP message is a delay measurement function message, and the PTP message is a delay request message that is involved in a peer-to-peer delay mechanism and includes the identifier. Based on this, after the sending the PTP message, the method further includes: obtaining a second delay measurement response message for the PTP message, where the second delay measurement response message is a delay response message that is involved in the peer-to-peer delay mechanism and includes the identifier; and determining a link transmission delay between a first communication apparatus and the second communication apparatus based on a timestamp of the PTP message and/or a timestamp of the second delay measurement response message.

In a possible implementation, after the obtaining the second delay measurement response message for the PTP message, the method further includes: obtaining a delay measurement response follow-up message for the second delay measurement response message, where the delay measurement response follow-up message is a delay response follow-up message that is involved in the peer-to-peer delay mechanism and includes the identifier, and the delay measurement response follow-up message includes the timestamp of the second delay measurement response message.

In a possible implementation, the PTP message includes a domain number field, a message type field, and a flag field, and the identifier is located in any one of the domain number field, the message type field, or the flag field.

In a possible implementation, the PTP message includes a message type field and a plurality of timestamp fields, the identifier is located in the message type field, the plurality of timestamp fields correspond to different delay measurement function messages, and each timestamp field is used to store a timestamp of a corresponding delay measurement function message.

In a possible implementation, the PTP message includes a domain number field, a message type field, and a flag field, the identifier includes a first sub-identifier and a second sub-identifier, and the first sub-identifier and the second sub-identifier are located in different ones of the domain number field, the message type field, and the flag field; and if either the first sub-identifier or the second sub-identifier is located in the domain number field, the sub-identifier indicates whether the PTP message is a delay measurement function message; if either the first sub-identifier or the second sub-identifier is located in the message type field, the sub-identifier indicates a message type of the PTP message and indicates that the PTP message is a delay measurement function message; or if either the first sub-identifier or the second sub-identifier is located in the flag field, the sub-identifier indicates whether the PTP message is a delay measurement function message.

In a possible implementation, the PTP message includes a domain number field, a message type field, and a flag field, and the identifier includes a first sub-identifier, a second sub-identifier, and a third sub-identifier; the first sub-identifier is located in the domain number field, and the first sub-identifier indicates whether the PTP message is a delay measurement function message; the second sub-identifier is located in the message type field, and the second sub-identifier indicates a message type of the PTP message and indicates that the PTP message is a delay measurement function message; and the third sub-identifier is located in the flag field, and the third sub-identifier indicates whether the PTP message is a delay measurement function message.

In a possible implementation, the PTP message includes a delay measurement type length value TLV, and the identifier is located in a type field in the delay measurement TLV.

In a possible implementation, the delay measurement TLV is a reserved TLV or a vendor TLV supported by the PTP message.

In a possible implementation, the identifier is a reserved value of the field in which the identifier is located.

For beneficial effects achieved in any one of the second aspect or the possible implementations of the second aspect, refer to the beneficial effects achieved in the first aspect or the corresponding implementations of the first aspect. Details are not described herein again.

According to a third aspect, a communication system is provided. The communication system includes the first communication apparatus in the first aspect and the second communication apparatus in the second aspect. The first communication apparatus is configured to perform the method provided in any one of the first aspect or the optional manners of the first aspect, and the second communication apparatus is configured to perform the method provided in any one of the second aspect or the optional manners of the second aspect.

According to a fourth aspect, an apparatus for processing a PTP message is provided, and is configured to perform the method provided in any one of the first aspect or the optional manners of the first aspect.

According to a fifth aspect, an apparatus for sending a PTP message is provided, and is configured to perform the method provided in any one of the second aspect or the optional manners of the second aspect.

According to a sixth aspect, a communication device is provided. The communication device includes a processor, and the processor is configured to execute program code, to cause the communication device to implement the method provided in any one of the first aspect or the optional manners of the first aspect or implement the method provided in any one of the second aspect or the optional manners of the second aspect.

According to a seventh aspect, a computer-readable storage medium is provided. The storage medium stores at least one piece of program code, and the program code is read by a processor, to cause a communication device to perform the method provided in any one of the first aspect or the optional manners of the first aspect or implement the method provided in any one of the second aspect or the optional manners of the second aspect.

According to an eighth aspect, a computer program product or a computer program is provided. The computer program product or the computer program includes program code, the program code is stored in a computer-readable storage medium, a processor reads the program code from the computer-readable storage medium, and the processor executes the program code, to cause a communication device to perform the method provided in the first aspect or the optional implementations of the first aspect or perform the method provided in any one of the second aspect or the optional manners of the second aspect.

In this application, based on the implementations provided in the foregoing aspects, the implementations may be further combined to provide more implementations.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a diagram of an architecture of another communication system according to an embodiment of this application;
FIG. 4 is a diagram of a PTP message in a first message format according to an embodiment of this application;
FIG. 5 is a diagram of a structure of a message header 401 according to an embodiment of this application;
FIG. 6 is a diagram of a value of a message type identifier in a message type field according to an embodiment of this application;
FIG. 7 is a diagram of a value of a domain number in a domain number field according to an embodiment of this application;
FIG. 8 is a diagram of a value of a flag field in a flag field according to an embodiment of this application;
FIG. 9 is a diagram of a structure of each delay measurement message involved in a PTP mechanism according to an embodiment of this application;
FIG. 10 is a diagram of a structure of each delay measurement message involved in an ETE mechanism according to an embodiment of this application;
FIG. 11 is a diagram of a type of a tlv used as a suffix 403 according to an embodiment of this application;
FIG. 12 is a diagram of a structure of a delay measurement TLV according to an embodiment of this application;
FIG. 13 is a diagram of a structure of another delay measurement TLV according to an embodiment of this application;
FIG. 14 is a diagram of a PTP message in a second message format according to an embodiment of this application;
FIG. 15 is a flowchart of a method for processing a PTP message according to an embodiment of this application;
FIG. 16 is a flowchart of another method for processing a PTP message according to an embodiment of this application;
FIG. 17 is a flowchart of exchanging a PTP message in a one step method mode in a PTP mechanism according to an embodiment of this application;
FIG. 18 is a flowchart of exchanging a PTP message in a two-step method mode in a PTP mechanism according to an embodiment of this application;
FIG. 19 is a flowchart of exchanging a PTP message in a one step method mode in an ETE mechanism according to an embodiment of this application;
FIG. 20 is a flowchart of exchanging a PTP message in a two-step method mode in an ETE mechanism according to an embodiment of this application;
FIG. 21 is a diagram of a structure of an apparatus for processing a PTP message according to an embodiment of this application;
FIG. 22 is a diagram of a structure of an apparatus for sending a PTP message according to an embodiment of this application;
FIG. 23 is a diagram of a structure of a communication device according to an embodiment of this application; and
FIG. 24 is a diagram of a structure of another communication device according to an embodiment of this application.

### DESCRIPTION OF EMBODIMENTS

For ease of understanding specific implementations of this application, the following describes the specific implementations of this application with reference to the accompanying drawings.

This application provides a method for processing a PTP message. The following describes an application environment of the method with reference to the accompanying drawings.

FIG. 1 is a diagram of an architecture of a communication system according to this application. The communication system 100 shown in FIG. 1 is a clock synchronization network that supports a PTP protocol. The communication system 100 includes a plurality of communication apparatuses, and the plurality of communication apparatuses are networked into a peer-to-peer (peer-to-peer, P2P) network in the communication system 100 in a peer-to-peer networking manner. As shown in FIG. 1, a communication apparatus 101 and a communication apparatus 102 in the communication system are networked into a P2P network. In another possible implementation, the P2P network may also include more than two communication apparatuses. Herein, a quantity of communication apparatuses used to form the P2P network in the communication system 100 is not limited.

Different communication apparatuses in a P2P network may be directly connected. Any two directly connected communication apparatuses are adjacent communication apparatuses in the P2P network, and the adjacent communication apparatuses may send PTP messages to each other, for example, the communication apparatus 101 and the communication apparatus 102 in FIG. 1.

Alternatively, adjacent communication apparatuses in a P2P network may be indirectly connected through at least one service bearing apparatus. The service bearing apparatus is a communication apparatus that provides service bearing services for communication apparatuses in the P2P network. For example, the service bearing apparatus can provide information transmission channels for the communication apparatuses in the P2P network, and forward or transparently transmit, to another communication apparatus in the P2P network, a PTP message sent by a communication apparatus in the P2P network.

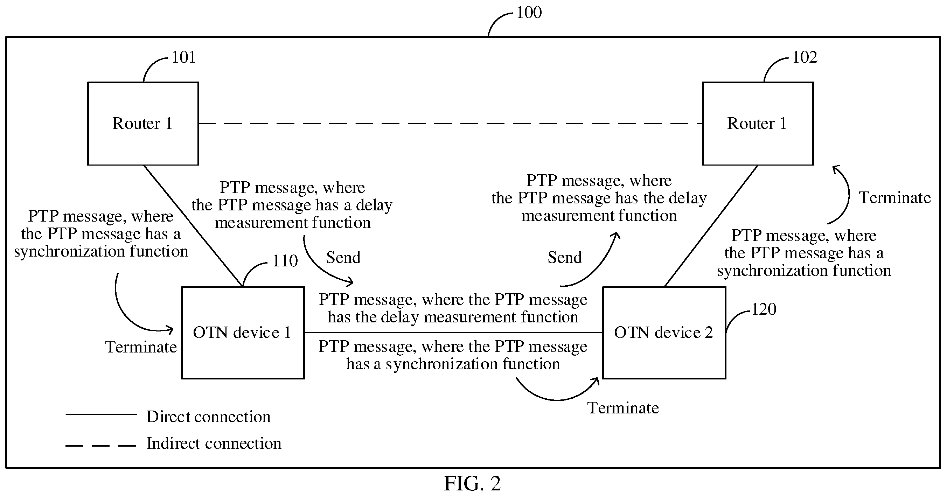

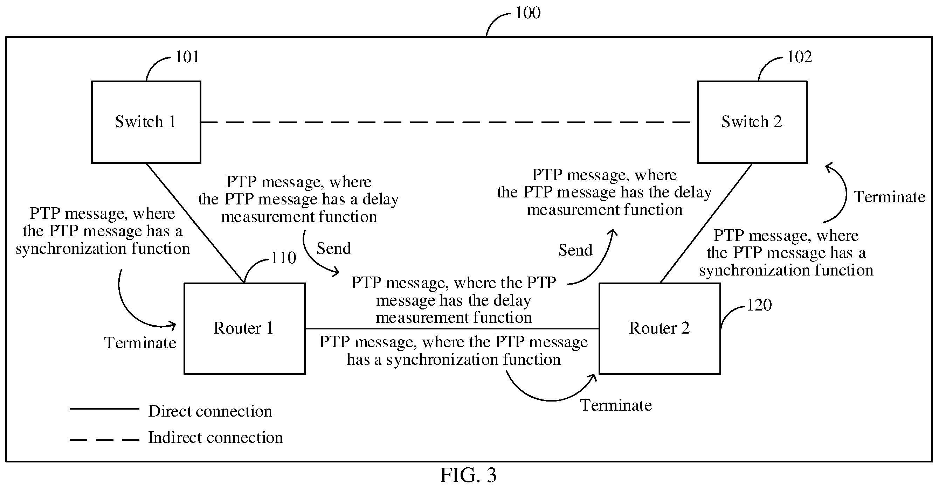

When any adjacent communication apparatuses in a P2P network are indirectly connected through a service bearing apparatus, the adjacent communication apparatuses send PTP messages to each other through the service bearing apparatus for connection. As shown in FIG. 2 and FIG. 3, the communication system 100 further includes a service bearing apparatus 110 and a service bearing apparatus 120. The communication apparatus 101 is indirectly connected to the communication apparatus 102 through the service bearing apparatus 110 and the service bearing apparatus 120. The communication apparatus 101 may send a PTP message to the communication apparatus 102 through the service bearing apparatus 110 and the service bearing apparatus 120. The communication apparatus 102 may send a PTP message to the communication apparatus 101 through the service bearing apparatus 120 and the service bearing apparatus 110.

Both FIG. 2 and FIG. 3 are shown by using an example in which the communication apparatus 101 and the communication apparatus 102 are indirectly connected through two service bearing apparatuses. In another possible implementation, adjacent communication apparatuses in a P2P network may also be indirectly connected through one service bearing apparatus. When the communication system 100 includes a service bearing apparatus, the service bearing apparatus in the communication system 100 may be networked into an underlay (underlay) physical network of a P2P network, to provide service bearing services for communication apparatuses in the P2P network.

In conclusion, the communication system 100 includes a P2P network, the P2P network includes a plurality of communication apparatuses, and the plurality of communication apparatuses are directly connected. In another possible implementation, the communication system 100 further includes an underlay network. The underlay network includes a plurality of service bearing apparatuses, or the underlay network may include one service bearing apparatus. Any adjacent communication apparatuses in the P2P network are indirectly connected through at least one service bearing apparatus in the underlay network. Certainly, the adjacent communication apparatuses may alternatively be directly connected without being indirectly connected through the service bearing apparatus. Herein, a quantity of communication apparatuses in the P2P network and a quantity of service bearing apparatuses in the underlay network are not limited.

Any communication apparatus in the P2P network or the underlay network may be a network device. For example, the network device may be a packet forwarding device, for example, a switch, a router, an internet protocol-based radio access network (Internet protocol radio access network, IPRAN), a packet transport network (packet transport network, PTN) device, a slicing packet network (slicing packet network, SPN) device, and a metro transport network (metro transport network, MTN) device, or the network device may be a network device having an optical signal transmission function, for example, an optical transport network (optical transport network, OTN) device. The communication apparatus may alternatively be a terminal side device. For example, a network processing module that supports the PTP protocol is installed in the terminal side device, and the terminal side device can exchange a PTP message with another communication apparatus through the network processing module. The terminal side device is, for example, a server or a computer device. Both FIG. 1 and FIG. 2 are shown by using an example in which the communication apparatus in the P2P network is a router. FIG. 3 is shown by using an example in which the communication apparatus in the P2P network is a switch. FIG. 2 is shown by using an example in which the communication apparatus (namely, the service bearing apparatus) in the underlay network is an OTN device. FIG. 3 is shown by using an example in which the communication apparatus in the underlay network is a router. Herein, a device type of the communication apparatus in the P2P network and a device type of the communication apparatus in the underlay network are not limited.

Each communication apparatus (including the communication apparatus in the P2P network and the service bearing apparatus in the underlay network) in the communication system 100 has a time synchronization function (referred to as a synchronization function for short) in the PTP protocol by running the PTP protocol. Adjacent communication apparatuses (namely, two directly connected communication apparatuses) in the communication system 100 send PTP messages to each other, to complete time synchronization. For example, in a scenario in which different communication apparatuses in a P2P network are directly connected, FIG. 1 is used as an example, the communication apparatus 101 sends a PTP message having a synchronization function to the communication apparatus 102, and the communication apparatus 102 synchronizes its time with the communication apparatus 101 based on the PTP message, to synchronize a clock of the communication apparatus 102. In a scenario in which adjacent communication apparatuses in a P2P network are indirectly connected, the communication apparatuses in FIG. 2 and FIG. 3 are used as an example, the communication apparatus 101 sends a PTP message having a synchronization function to the service bearing apparatus 110, the service bearing apparatus 110 synchronizes its time with the communication apparatus 101 based on the PTP message, the service bearing apparatus 110 sends another PTP message having a synchronization function to the service bearing apparatus 120, the service bearing apparatus 120 synchronizes its time with the service bearing apparatus 110 based on the PTP message from the service bearing apparatus 110, the service bearing apparatus 120 sends another PTP message having a clock synchronization function to the communication apparatus 102, and the communication apparatus 102 synchronizes its time with the service bearing apparatus 120 based on the PTP message from the service bearing apparatus 120.

A clock of a communication apparatus that releases a clock signal by using a PTP message is a master (master) clock, a clock of a communication apparatus that performs time synchronization based on the PTP message is a slave (slave) clock, the communication apparatus to which the master clock belongs is a master clock device, and the communication apparatus to which the slave clock belongs is a slave clock device. FIG. 1 is used as an example. The communication apparatus 101 is a master clock device for the communication apparatus 102, and the communication apparatus 102 is a slave clock device for the communication apparatus 101. FIG. 2 and FIG. 3 are further used as an example. The communication apparatus 101 is a master clock device for the service bearing apparatus 110, and the service bearing apparatus 110 is a slave clock device for the communication apparatus 101 and a master clock device for the service bearing apparatus 120.

As shown in FIG. 2 and FIG. 3, because the PTP message that has the synchronization function and that is from the communication apparatus 101 is not sent by the service bearing apparatus 110 to another communication apparatus, that is, the service bearing apparatus 110 terminates the PTP message from the communication apparatus 101, the PTP message from the communication apparatus 101 is terminated at the service bearing apparatus 110. Correspondingly, the PTP message that has the synchronization function and that is sent by the service bearing apparatus 110 to the service bearing apparatus 120 is terminated at the service bearing apparatus 120, and the PTP message that has the synchronization function and that is sent by the service bearing apparatus 120 to the communication apparatus 102 is terminated at the communication apparatus 102.

When any adjacent communication apparatuses in a P2P network have a delay measurement requirement, the adjacent communication apparatuses may send PTP messages having a delay measurement function to each other, to measure a link (link) transmission delay between the adjacent communication apparatuses. The link transmission delay is transmission duration of the PTP messages between the adjacent communication apparatuses. For example, in a scenario in which adjacent communication apparatuses in a P2P network are directly connected,

FIG. 1 is used as an example, the communication apparatus 101 sends a PTP message having a delay measurement function to the communication apparatus 102, and the communication apparatus 102 performs delay measurement based on the PTP message; or the communication apparatus 102 sends a PTP message having a delay measurement function to the communication apparatus 101, and the communication apparatus 101 performs delay measurement based on the PTP message. In a scenario in which adjacent communication apparatuses in a P2P network are indirectly connected, a service bearing apparatus is further responsible for forwarding service messages of the adjacent communication apparatus between the adjacent communication apparatuses in the P2P network, and a PTP message having a delay measurement function is a service message of the P2P network in a delay measurement scenario. Therefore, in the delay measurement scenario, the service bearing apparatus is responsible for forwarding PTP messages that are sent by the adjacent communication apparatuses in the P2P network to each other and that have a delay measurement function. The communication apparatuses in FIG. 2 and FIG. 3 are used as an example. The communication apparatus 101 sends a PTP message having a delay measurement function to the service bearing apparatus 110, the service bearing apparatus 110 sends the PTP message to the service bearing apparatus 120, the service bearing apparatus 120 sends the PTP message to the communication apparatus 102, and the communication apparatus 102 performs delay measurement based on the PTP message.

The following describes the PTP message in this application.

In terms of functions, in this application, the PTP message is classified into a PTP message having a delay measurement function and a PTP message having a synchronization function. For ease of description, the PTP message having a delay measurement function is referred to as a delay measurement function message, and the PTP message having a synchronization function is referred to as a synchronization function message, or a PTP message that does not have the delay measurement function is referred to as a synchronization function message.

In this application, an identifier is added to the PTP message, so that the PTP message has a delay measurement function or a time synchronization function. The identifier indicates whether the PTP message in which the identifier is located is a delay measurement function message. For example, if the identifier indicates that the PTP message is a delay measurement function message, the PTP message has a delay measurement function; or if the identifier indicates that the PTP message is not a delay measurement function message, the PTP message does not have a delay measurement function, and the PTP message is a synchronization function message. The PTP message further includes another identifier in addition to the identifier. To distinguish the identifier from the another identifier, and for ease of description, the identifier indicating whether the PTP message is a delay measurement function message is referred to as a delay measurement identifier.

The PTP message including the delay measurement identifier may have a first message format or a second message format. The following separately describes the two message formats with reference to the accompanying drawings.

### 1. First message format of the PTP message

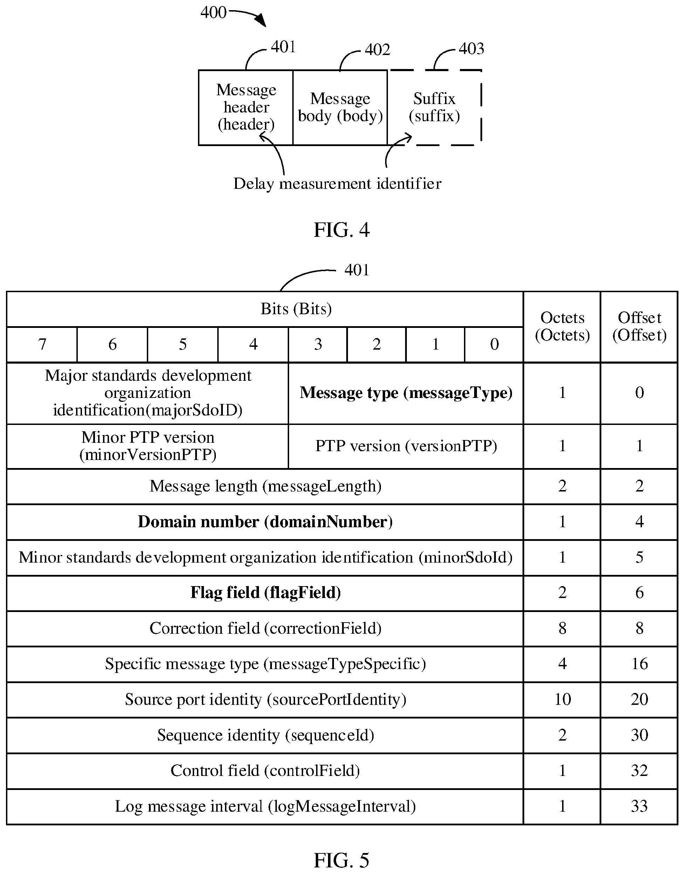

FIG. 4 is a diagram of a PTP message in a first message format according to an embodiment of this application. As shown in FIG. 4, the PTP message 400 includes a message header (header) 401, a message body (body) 402, and a suffix (suffix) 403, and a delay measurement identifier is located in the message header 401 or the suffix 403. The message header 401, the message body 402, and the suffix 403 are separately described in the following 1.1 to 1.3.

### 1.1. Message header 401

The message header 401 is used to define a version of the PTP protocol and a message type of the PTP message, and is further used to define other content of the PTP message. For example, FIG. 5 is a diagram of a structure of a message header 401 according to an embodiment of this application. As shown in FIG. 5, the message header 401 is 34 octets long, and the message header 401 includes the following fields.

A major standards development organization identification (major standards development organization identification, majorSdoId) field occupies 4 bits (Bits), and is used to store a major standards development organization identification of a domain in which a generation apparatus of the PTP message is located. The domain includes one or more PTP instances (for example, a communication apparatus running the PTP protocol), and the domain has two attribute identifiers, namely, a standards development organization identification (standards development organization identification, SdoId) and a domain number (domainNumber), where the SdoId is an identification of a standard organization that specifies the PTP protocol, a value of the SdoId ranges from 0 to 4095, the value of the SdoId is a 12-bit integer, the most significant 4 bits in the 12-bit integer are referred to as the majorSdoId, and the last 8 bits in the 12-bit integer are referred to as a minor standards development organization identification (minor standards development organization identification, minorSdoId).

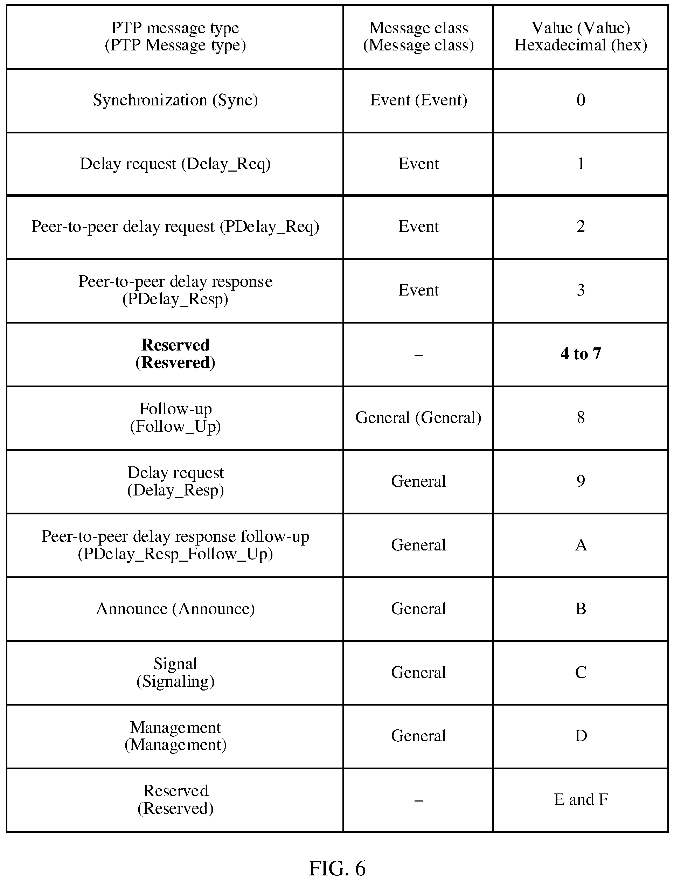

A message type (messageType) field occupies 4 bits and is used to store a message type identifier of the PTP message. As shown in FIG. 6, the message type identifier indicates a message type of the PTP message, different values (values) of the message type identifier represent different message types, and a most significant bit of the message type field indicates that the PTP message is an event (Event) message or a general (General) message.

A minor PTP version (minorVersionPTP) field occupies 4 bits, and is used to store a minor version number, where the minor version number and a major PTP version number in a PTP version field jointly represent a version of a PTP protocol run by a PTP instance that releases the PTP message.

The PTP version (versionPTP) field occupies 4 bits, and is used to store a major version number of the PTP protocol.

A message length (messageLength) field occupies 8 bits, and is used to store a message length, where the message length is a length of the PTP message.

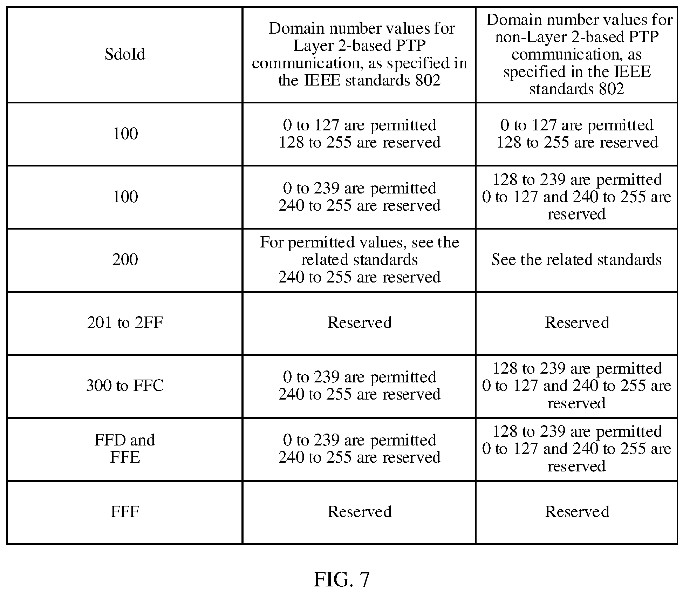

A domain number (domainNumber) field occupies 8 bits and is used to store a domain number, where the domain number indicates a domain to which a communication apparatus that sends the PTP message belongs, and a value of the domain number is shown in FIG. 7.

A minorSdoId field occupies 8 bits, and is used to store a minorSdoId.

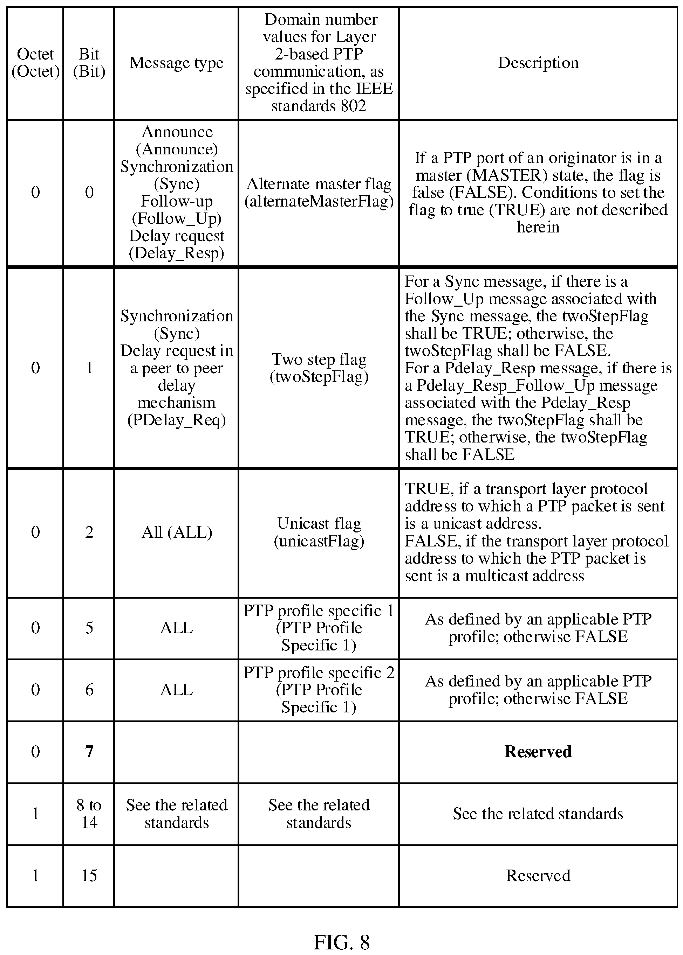

A flag field (flagField) occupies 8 bits and is used to store a flag field. As shown in FIG. 8, different values of the flag field have different meanings.

A correction field (correctionField) occupies 8 bits and is used to store a correction field, where the correction field is used to compensate for a link transmission delay between adjacent transmission apparatuses in a P2P network.

A specific message type (messageTypeSpecific) field occupies 8 bits and is used to store a specific message type identifier, where a value of the specific message type identifier depends on a message type of the PTP message.

A source port identity (sourcePortIdentity) field occupies 8 bits and is used to store a source port identity, where the source port identity indicates an apparatus identity (Identity, ID) of a communication apparatus that sends the PTP message and a port number of a port through which the communication apparatus sends the PTP message.

A sequence identity (sequenceId) field occupies 8 bits and is used to store a sequence identity, where the sequence identity indicates a sequence number of the PTP message and a correspondence between the PTP message and an association message.

A control field (controlField) occupies 8 bits and is used to store a control field, where a value of the control field depends on a message type of the PTP message.

A log message interval (logMessageInterval) field occupies 8 bits and is used to store a log message interval, where the log message interval is an interval for sending PTP messages, and a size of the log message interval depends on a message type of the PTP message.

In a possible implementation, the delay measurement identifier is located in the message header 401, and is not located in the suffix 403. For this implementation, the delay measurement identifier is located in any one of the message type field, the domain number field, or the flag field in the message header 401. The following separately describes, in the following 1.1.1 to 1.1.3, values of the delay measurement identifier when the delay measurement identifier is located in the three fields.

### 1.1.1. The delay measurement identifier is located in the message type field.

As shown in FIG. 6, in terms of message types, in the PTP protocol, the PTP message is classified into a synchronization (Sync) message, a peer-to-peer delay request (Delay Request, Delay_Req) message, a delay request (Peer-to-peer Delay Request, Pdelay_Req) message, a peer-to-peer delay response (Peer-to-peer Delay Response, Pdelay_Resp) request, a follow-up (Follow_Up) message, a peer-to-peer delay response follow-up (Peer-to-peer Delay Response Follow Up, Pdelay_Resp_Follow_Up) request, a delay response (Delay Response, Delay_Resp) message, an announce (Announce) message, a signal (Signaling), a management (Management) message, and a reserved (Reserved) message. The reserved message is a PTP message of a message type that has not been used. None of these PTP messages include the delay measurement identifier.

The PTP protocol supports two delay measurement mechanisms, namely, a delay request-response mechanism and a peer-to-peer delay mechanism. The two delay measurement mechanisms are involved in PTP messages of different message types. The delay request-response mechanism is also referred to as an end to end (end to end, ETE) mechanism, and PTP messages involved in the ETE mechanism include the Sync message, the Delay_Req message, the Delay_Resp message, and the Follow_Up message. The peer-to-peer delay mechanism is referred to as a peer-to-peer (peer-to-peer, PTP) mechanism for short. PTP messages involved in the PTP mechanism include the Pdelay_Req message, the Pdelay_Resp message, and the Pdelay_Resp_Follow_Up message. Adjacent communication apparatuses in the P2P network in the communication system 100 may measure a link transmission delay between adjacent PTP ports by using either of the two delay measurement mechanisms, where the adjacent PTP ports are a port pair used by the adjacent communication apparatuses to receive and send a same PTP message.

When the delay measurement identifier is located in the message type field, the delay measurement identifier may be further used as a message type identifier. In this case, the delay measurement identifier indicates that the PTP message is a delay measurement function message and indicates a message type of the PTP message. In a possible implementation, the delay measurement identifier corresponds to a plurality of values, and the plurality of values are different. When a value of the delay measurement identifier is any one of the plurality of values, the delay measurement identifier indicates that the PTP message is a delay measurement function message.

The plurality of values may all be reserved values of the message type field (namely, reserved values of the message type identifier). As shown in FIG. 6, the reserved values of the message type field include 4 to 7 and E and F, and the plurality of values are values in 4 to 7 and E and F.

Alternatively, the plurality of values may be user-defined values other than values occupied by the message type field. The values occupied by the message type field are values already used by the message type identifier and reserved values in a related technology, for example, 0 to F shown in FIG. 6 are values occupied by the message type field.

Alternatively, at least one of the plurality of values is a reserved value of the message type field, and remaining values are user-defined values. Herein, the value of the delay measurement identifier in the message type field is not limited in this application.

When the value of the delay measurement identifier is the reserved value of the message type field or the user-defined value, occupation of a value of a message type of the synchronization function message can be avoided, so that a communication apparatus can distinguish, based on the value of the delay measurement identifier, whether a PTP message in which the delay measurement identifier is located is a delay measurement function message or a synchronization function message.

In a possible implementation, the plurality of values correspond to different message types, and the message types corresponding to the plurality of values are message types of PTP messages involved in a same delay measurement mechanism. The PTP mechanism is used as an example. Message types of PTP messages involved in the PTP mechanism include Pdelay_Req, Pdelay_Resp, and Pdelay_Resp_Follow_Up. It is assumed that the plurality of values are respectively reserved values {4, 5, and 6} of the message type field, where message types corresponding to 4, 5, and 6 are respectively Pdelay_Req, Pdelay_Resp, and Pdelay_Resp_Follow_Up. If the delay measurement identifier is 4, the PTP message 400 is a delay measurement function message and a Pdelay_Req message involved in the PTP mechanism. If the delay measurement identifier is 5, the PTP message 400 is a delay measurement function message and a Pdelay_Resp message involved in the PTP mechanism. If the delay measurement identifier is 6, the PTP message 400 is a delay measurement function message and a Pdelay_Resp_Follow_Up message involved in the PTP mechanism. The ETE mechanism is further used as an example. Message types of PTP messages involved in the ETE mechanism include Sync, Delay_Req, Delay_Resp, and Follow_Up. It is assumed that the plurality of values are respectively reserved values {4, 5, 6, and 7} of the message type field, where message types corresponding to 4, 5, 6, and 7 are respectively Sync, Delay_Req, Delay_Resp, and Follow_Up. If the delay measurement identifier is 4, the PTP message is a delay measurement function message and a Sync message involved in the ETE mechanism. If the delay measurement identifier is 5, the PTP message 400 is a delay measurement function message and a Delay_Req message involved in the ETE mechanism. If the delay measurement identifier is 6, the PTP message 400 is a delay measurement function message and a Delay_Resp message involved in the ETE mechanism. If the delay measurement identifier is 7, the PTP message 400 is a delay measurement function message and a Follow_Up message involved in the ETE mechanism.

To distinguish between delay measurement function messages involved in different delay measurement mechanisms, for the ETE mechanism, a synchronization message that is involved in the ETE mechanism and includes the delay measurement identifier is referred to as a delay measurement synchronization message, namely, a Sync message that includes the delay measurement identifier; a delay request message that is involved in the ETE mechanism and includes the delay measurement identifier is referred to as a first delay measurement request message, namely, a Delay_Req message that includes the delay measurement identifier; a delay response message that is involved in the ETE mechanism and includes the delay measurement identifier is referred to as a first delay measurement response message, namely, a Delay_Resp message that includes the delay measurement identifier; and a follow-up message that is involved in the ETE mechanism and includes the delay measurement identifier is referred to as a delay measurement follow-up message, namely, a Follow_Up message that includes the delay measurement identifier. To distinguish from the Sync message, the Delay_Req message, the Delay_Resp message, the Delay_Resp message, and the Follow_Up message, the delay measurement synchronization message, the first delay measurement request message, the first delay measurement response message, and the delay measurement follow-up message are respectively represented as: a Sync_dm message, a Delay_Req_dm message, a Delay_Resp_dm message, and a Follow_Up_dm message, where dm represents delay measurement (delay measurement).

For the PTP mechanism, a delay request message that is involved in the PTP mechanism and includes the delay measurement identifier is referred to as a second delay measurement request message, namely, a Pdelay_Req message that includes the delay measurement identifier; a delay response message that is involved in the PTP mechanism and includes the delay measurement identifier is referred to as a second delay measurement response message, namely, a Pdelay_Resp message that includes the delay measurement identifier; and a delay response follow-up message that is involved in the PTP mechanism and includes the delay measurement identifier is referred to as a delay measurement response follow-up message, namely, a Pdelay_Resp_Follow_Up message that includes the delay measurement identifier. To distinguish from the Pdelay_Resp message, the Pdelay_Resp message, and the Pdelay_Resp_Follow_Up message, the second delay measurement request message, the second delay measurement response message, and the delay measurement response follow-up message are respectively represented as: a Pdelay_Req_dm message, a Pdelay_Resp_dm message, and a Pdelay_Resp_Follow_Up_dm message, where dm represents delay measurement (delay measurement).

### 1.1.2. The delay measurement identifier is located in the domain number field.

When the delay measurement identifier is located in the domain number field, the delay measurement identifier indicates whether the PTP message is a delay measurement function message. In this case, the delay measurement identifier corresponds to two values, and the two values are different. One of the two values represents that the PTP message is a delay measurement function message, and the other value represents that the PTP message is not a delay measurement function message. A value of the delay measurement identifier may be selected from the two values.

The two values may both be reserved values of the domain number field (namely, reserved values of a domain number). As shown in FIG. 7, the reserved values of the domain number field include 201 to 2FF, and the two values may be any two values in 201 to 2FF. For example, if the delay measurement identifier is 201, the delay measurement identifier indicates that the PTP message is a delay measurement function message; or if the delay measurement identifier is 202, the delay measurement identifier indicates that the PTP message is not a delay measurement function message.

Alternatively, the two values may both be user-defined values other than values occupied by the domain number field. The values occupied by the domain number field are values already used by the domain number and reserved values in the related technology, for example, permitted domain number values and reserved values shown in FIG. 7.

Alternatively, one of the two values is a reserved value of the domain number field, and the other value is a user-defined value. Herein, the value of the delay measurement identifier in the domain number field is not limited in this application.

In another possible implementation, the delay measurement identifier has only one value in the domain number field, and the value of the delay measurement identifier is the reserved value of the domain number field or the user-defined value. The reserved value is used as an example. If the value in the domain number field is 201, 201 is the delay measurement identifier, and the delay measurement identifier indicates that the PTP message is a delay measurement synchronization message. If the value in the domain number field is not 201, the value in the domain number field is a domain number, not the delay measurement identifier. In this case, the PTP message does not include the delay measurement identifier, and the PTP message is not a delay measurement function message.

When the value of the delay measurement identifier is the reserved value of the domain number field or the user-defined value, occupation of a known domain number value can be avoided, so that a communication apparatus can distinguish, based on the value in the domain number, whether the value in the domain number is the domain number or the delay measurement identifier. When the value in the domain number is the delay measurement identifier, the communication apparatus may determine, based on the value of the delay measurement identifier, whether the PTP message is a delay measurement function message. When the PTP message is the delay measurement function message, the communication apparatus may further determine, with reference to a value of the message type identifier in the message type field, that the PTP message is the delay measurement function message involved in a specific delay measurement mechanism.

### 1.1.3. The delay measurement identifier is located in the flag field.

When the delay measurement identifier is located in the flag field, the delay measurement identifier indicates whether the PTP message is a delay measurement function message. The delay measurement identifier is a value of any reserved bit in the flag field, and the reserved bit is a bit that has not been defined in the flag field in the related technology. FIG. 8 is used as an example. Both a 7^{th} bit and a 15^{th} bit in the flag field are reserved bits. It is assumed that the 7^{th} bit in the flag field is the delay measurement identifier. When a value of the 7^{th} bit is 1, it indicates that the PTP message is a delay measurement function message. When the value of the 7^{th} bit is 0, it indicates that the PTP message is not a delay measurement function message.

Alternatively, the delay measurement identifier includes values of two reserved bits in the flag field. The values of the two reserved bits may be combined into four types of values such as 00, 01, 10, and 11. Any two of the four types of values are used as the delay measurement identifier. One of the two types of values indicates that the PTP message is a delay measurement function message, and the other of the two types of values indicates that the PTP message is not a delay measurement function message. FIG. 8 is still used as an example. It is assumed that values of a 7^{th} bit and a 15^{th} bit in the flag field form the delay measurement identifier. When the value of the 7^{th} bit is 1 and the value of the 15^{th} bit is 1, it indicates that the PTP message is a delay measurement function message. When the value of the 7^{th} bit is 1 and the value of the 15^{th} bit is 0, it indicates that the PTP message is not a delay measurement function message.

When the delay measurement identifier is a specific value of the reserved field in the flag field, the delay measurement identifier cannot occupy a defined bit in the flag field, so that a communication apparatus determines, depending on whether the reserved bit in the flag field is the specific value, whether the PTP message is a delay measurement function message. When the PTP message is the delay measurement function message, the communication apparatus may further determine, with reference to a value of the message type identifier in the message type field, that the PTP message is the delay measurement function message involved in a specific delay measurement mechanism. A value of the reserved field in the flag field is a reserved value of the flag field. When the delay measurement identifier is the specific value of the reserved field in the flag field, the delay measurement identifier is the reserved value of the flag field.

1.1.1 is described by using an example in which the delay measurement identifier occupies all bits in the message type field, and 1.1.2 is described by using an example in which the delay measurement identifier occupies all bits in the domain number field. In another possible implementation, when the delay measurement identifier is located in either the message type field or the domain number field, 1 or 2 bits are extended for the field. The extended bit is referred to as an extended bit, and the extended bit may be located at a tail of the field. The delay measurement identifier is represented by using a value of the extended bit. For the value of the extended bit, refer to the case in which the value of the reserved bit is the delay measurement identifier when the delay measurement identifier is located in the flag field in 1.1.3. Details are not described herein again. When the value of the extended bit is used as the delay measurement identifier, if the delay measurement identifier indicates that the PTP message is a delay measurement function message, the communication apparatus may further determine, with reference to a value of the message type identifier in the message type field, that the PTP message is the delay measurement function message involved in a specific delay measurement mechanism.

The foregoing 1.1.1 to 1.1.3 are described by using an example in which the delay measurement identifier is located in one field in the message header. In another possible implementation, the delay measurement identifier may alternatively be located in a plurality of fields in the message header, for example, the following 1.1.4.

**1.1.4. The delay measurement identifier includes a plurality of sub-identifiers, and the plurality of sub-identifiers are located in at least two fields of the message type field, the domain number field, and the flag field.**

In a possible implementation, the delay measurement identifier includes a first sub-identifier and a second sub-identifier, and the first sub-identifier and the second sub-identifier are located in different ones of the domain number field, the message type field, and the flag field. For example, the first sub-identifier and the second sub-identifier are respectively located in the domain number field and the message type field, the first sub-identifier and the second sub-identifier are respectively located in the flag field and the message type field, or the first sub-identifier and the second sub-identifier are respectively located in the domain number field and the flag field.

If either the first sub-identifier or the second sub-identifier is located in the domain number field, the sub-identifier indicates whether the PTP message is a delay measurement function message. In this case, for a value of the sub-identifier and meanings represented by different values, refer to the value of the delay measurement identifier in the domain number field and meanings represented by different values in 1.1.2, or the value of the sub-identifier may be a value of an extended bit in the domain number field. Details are not described herein again. For example, it is assumed that the sub-identifier is located in the domain number field. When the sub-identifier is the reserved value 201 of the domain number field, the sub-identifier indicates that the PTP message is a delay measurement function message.

If the sub-identifier is located in the message type field, the sub-identifier indicates a message type of the PTP message and indicates that the PTP message is a delay measurement function message. In this case, for a value of the sub-identifier and meanings represented by different values, refer to the value of the delay measurement identifier in the message type field and meanings represented by different values in 1.1.1, or the value of the sub-identifier may be a value of an extended bit in the message type field. Details are not described herein again. For example, assuming that the sub-identifier is the reserved value 4, 5, or 6 of the message type field, the second sub-identifier separately indicates that the PTP message is a Pdelay_Req_dm message, a Pdelay_Resp_dm message, or a Pdelay_Resp_Follow_Up_dm message. Although the sub-identifier indicates that the PTP message is a delay measurement type identifier, whether the PTP message is a delay measurement type identifier depends on the other sub-identifier.

If the sub-identifier is located in the flag field, the sub-identifier indicates whether the PTP message is a delay measurement function message. In this case, for a value of the sub-identifier and meanings represented by different values, refer to the value of the delay measurement identifier in the flag field and meanings represented by different values in 1.1.3. Details are not described herein again. For example, it is assumed that the 7^{th} bit in the flag field is the sub-identifier. When the value of the 7^{th} bit is 1, it indicates that the PTP message is a delay measurement function message. When the value of the 7^{th} bit is 0, it indicates that the PTP message is not a delay measurement function message.

For this implementation, when both the first sub-identifier and the second sub-identifier indicate that the PTP message is a delay measurement function message, the delay measurement identifier indicates that the PTP message is the delay measurement function message. For example, it is assumed that the first sub-identifier is located in the domain number field, and the second sub-identifier is located in the message type field. When the first sub-identifier is the reserved value 201 of the domain number field and the second sub-identifier is the reserved value 4 of the message type field, the delay measurement identifier indicates that the PTP message is a delay measurement function message. When at least one of the second sub-identifier in the first sub-identifier indicates that the PTP message is not a delay measurement function message, the delay measurement identifier indicates that the PTP message is not the delay measurement function message. For example, it is assumed that the reserved value 201 of the domain number field is the first sub-identifier, and the reserved value 201 indicates that the PTP message is a delay measurement function message; and it is assumed that the reserved value 4 of the message type field is the second sub-identifier, and the reserved value 4 indicates that the PTP message is a delay measurement function message and a message type of the PTP message is Pdelay_Req. Based on this, when a value of the domain number field is not the reserved value 201, and a value of the message type field is the reserved value 4, because the value of the domain number field is not the reserved value 201, the delay measurement identifier jointly represented by the first sub-identifier and the second sub-identifier indicates that the PTP message is not a delay measurement function message, and based on the indication of the reserved value 4 of the message type field, it can be learned that the PTP message is a Pdelay_Req message.

In another possible implementation, the delay measurement identifier includes a first sub-identifier, a second sub-identifier, and a third sub-identifier. The first sub-identifier is located in the domain number field, and the first sub-identifier indicates whether the PTP message is a delay measurement function message. In this case, for a value of the first sub-identifier and meanings represented by different values, refer to the value of the delay measurement identifier in the domain number field and meanings represented by different values in 1.1.2, or the value of the first sub-identifier may be a value of an extended bit in the domain number field. Details are not described herein again. The second sub-identifier is located in the message type field, and the second sub-identifier indicates a message type of the PTP message and indicates that the PTP message is a delay measurement function message. In this case, for a value of the second sub-identifier and meanings represented by different values, refer to the value of the sub-identifier when the sub-identifier is located in the message type field and the meaning represented by the value. Details are not described herein again. The third sub-identifier is located in the flag field, and the third sub-identifier indicates whether the PTP message is a delay measurement function message. In this case, for a value of the third sub-identifier and meanings represented by different values, refer to the value of the delay measurement identifier in the flag field and meanings represented by different values in 1.1.3. Details are not described herein again.

For this implementation, when the first sub-identifier, the second sub-identifier, and the third sub-identifier all indicate that the PTP message is a delay measurement function message, the delay measurement identifier indicates that the PTP message is the delay measurement function message; or when at least one of the first sub-identifier, the second sub-identifier, and the third sub-identifier indicates that the PTP message is not a delay measurement function message, the delay measurement identifier indicates that the PTP message is not the delay measurement function message.

### 1.2. Message body 402

Structures of message bodies 402 of delay measurement messages involved in different delay measurement mechanisms are different. The following separately describes, in the following 1.2.1 and 1.2.2, structures of message bodies 402 of delay measurement messages involved in the PTP mechanism and the ETE mechanism.

### 1.2.1 Message body 402 of a delay measurement message involved in the PTP mechanism

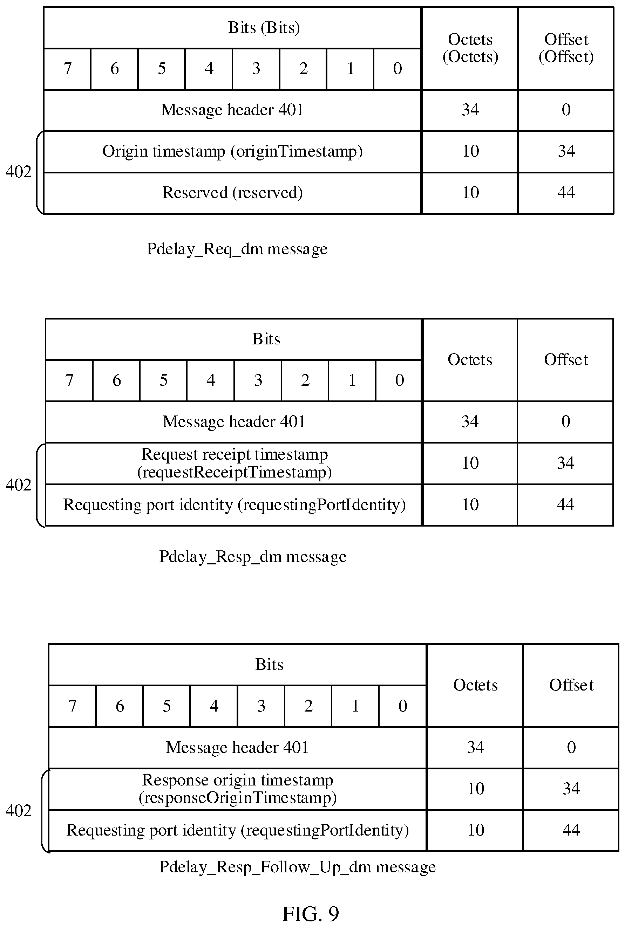

FIG. 9 is a diagram of a structure of each delay measurement message involved in a PTP mechanism according to an embodiment of this application. As shown in FIG. 9, a message body 402 of a Pdelay_Req_dm message includes the following fields.

An origin timestamp (originTimestamp) field is used to store an origin timestamp, where the origin timestamp is 0.

A value of a reserved (reserved) field is 0, so that a function of the Pdelay_Req_dm message is further extended based on the reserved field.

A message body 402 of a Pdelay_Resp_dm message includes the following fields.

A request receipt timestamp (requestReceiptTimestamp) field is used to store a request receipt timestamp. In a one step (one step) method mode in the PTP mechanism, a value of the request receipt timestamp is duration in which a communication apparatus that sends the Pdelay_Resp_dm message responds to the Pdelay_Req_dm, namely, processing duration of the Pdelay_Req_dm in the communication apparatus. In a two-step (two-step) method mode in the PTP mechanism, the request receipt timestamp is a timestamp of receiving time of the Pdelay_Req_dm message. In this application, receiving time of any PTP message is time at which the communication apparatus receives the PTP message.

A requesting port identity (requestingPortIdentity) field is used to store a requesting port identity, where the requesting port identity is an identity of a port through which the Pdelay_Resp_dm message is sent in response to the Pdelay_Req_dm message.

A message body 402 of a Pdelay_Resp_Follow_Up_dm message includes the following fields.

A response origin timestamp (responseOriginTimestamp) field is used to store a response origin timestamp. In the two-step method mode in the PTP mechanism, the response origin timestamp is a timestamp of sending time of the Pdelay_Resp_dm message followed by the Pdelay_Resp_Follow_Up_dm message. In this application, sending time of any PTP message is time at which a communication apparatus that generates the PTP message sends the PTP message.

A requesting port identity (requestingPortIdentity) field is used to store a requesting port identity, where the requesting port identity is an identity of a port through which the Pdelay_Resp_dm message is sent.

### 1.2.2 Message body 402 of a delay measurement message involved in the ETE mechanism

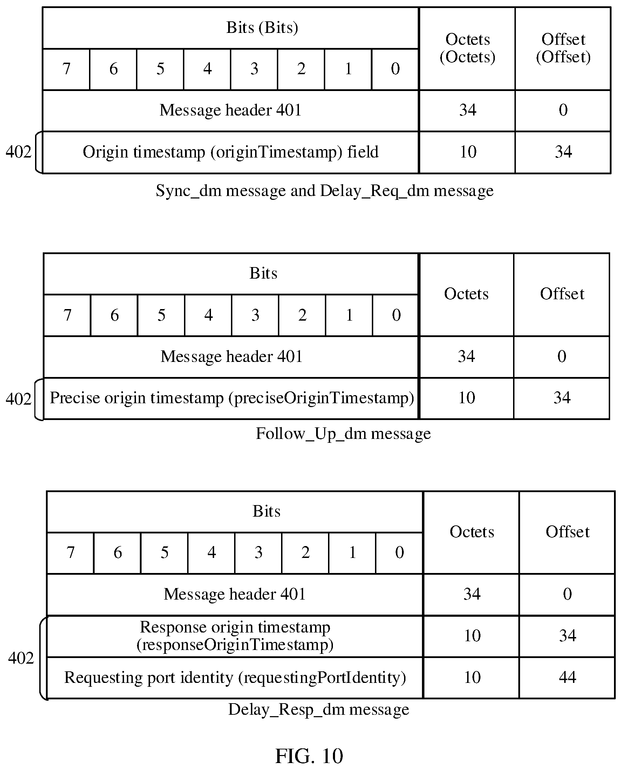

FIG. 10 is a diagram of a structure of a delay measurement message involved in an ETE mechanism according to an embodiment of this application. As shown in FIG. 10, a message body 402 of a Sync_dm message includes the following fields.

An origin timestamp (originTimestamp) field is used to store an origin timestamp. In a one step method mode in the ETE mechanism, the origin timestamp is a timestamp of sending time of the Sync_dm message. In a two-step method mode in the ETE mechanism, a value of the origin timestamp is 0.

A message body 402 of a Delay_Req_dm message includes the following field.

An origin timestamp (originTimestamp) field is used to store an origin timestamp, where a value of the origin timestamp is 0.

A message body 402 of a Follow_Up_dm message includes the following field.

A precise origin timestamp (preciseOriginTimestamp) field is used to store a precise origin timestamp, where the precise origin timestamp is a timestamp of sending time of the Sync_dm message followed by the Follow_Up_dm message.

A message body 402 of a Delay_Resp_dm message includes the following fields.

A response origin timestamp (responseOriginTimestamp) field is used to store a response origin timestamp, where the response origin timestamp is a timestamp of receiving time of the Delay_Req_dm message responded to by the Delay_Resp_dm message.

A requesting port identity (requestingPortIdentity) field is used to store a requesting port identity, where the requesting port identity is an identity of a port through which the Delay_Resp_dm message is received.

The message header of each time measurement message shown in FIG. 9 and FIG. 10 may be the message header 401 including the delay measurement identifier.

### 1.3. Suffix 403

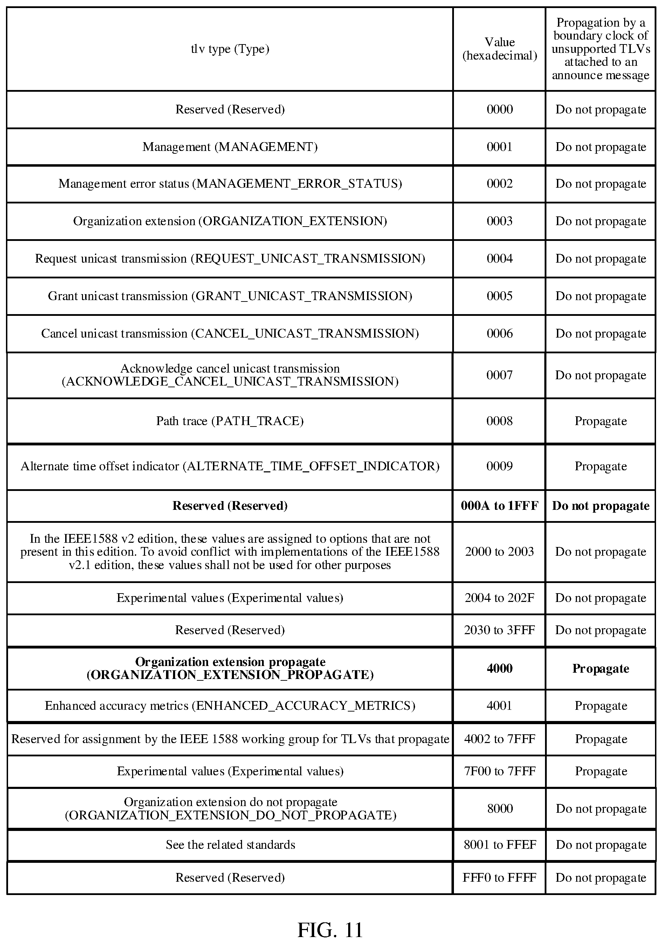

The suffix 403 may be any type length value (type length Value, TLV) shown in FIG. 11. The suffix 403 is optional (Optional) in the PTP message 400, and is located at a tail of the PTP message 400. In another possible implementation, the PTP message 400 may not include the suffix 403.

When the delay measurement identifier is located in the suffix 403, the delay measurement identifier is located in a delay measurement type length value (type length Value, TLV), and the delay measurement TLV is the suffix 403. For example, in the following 1.3.1 and 1.3.2, the delay measurement TLV may be a reserved (Reserved) TLV or a vendor TLV supported by the PTP message 400. The reserved TLV or the vendor TLV is used to carry the delay measurement identifier, so that the delay measurement identifier does not occupy another field in the PTP message 400, to avoid interference to the another field.

### 1.3.1 The delay measurement TLV is the reserved TLV supported by the PTP message 400.

In this case, the delay measurement TLV may be any reserved TLV that is supported by the PTP message and that is shown in FIG. 11, for example, a reserved TLV corresponding to a tlv type (Type) whose value falls within 000A to 1FFF, or a reserved TLV corresponding to a TLV type whose value falls within FFF0 to FFFF.

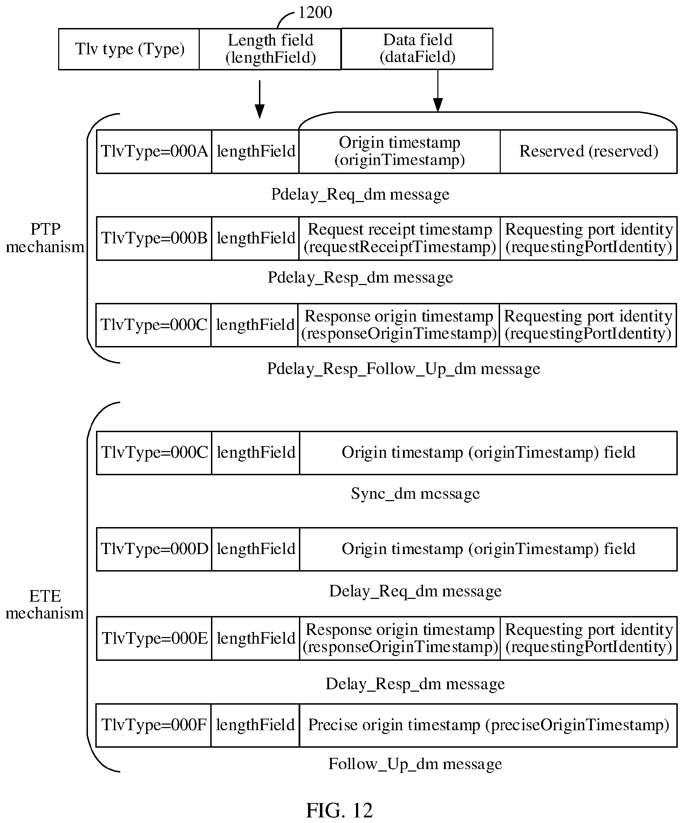

For example, the reserved TLV is a delay measurement TLV. A delay measurement TLV 1200 shown in FIG. 12 includes the following fields.

A tlvType field is used to store a tlvType identifier of the delay measurement TLV, where the tlvType identifier indicates that a TLV in which the tlvType identifier is located is a reserved TLV. Assuming that the TLV in which the tlvType identifier is located is the reserved TLV corresponding to 000A to 1FFF, and a value of the TLV type identifier is any value in 000A to 1FFF.

A length field (lengthField) is used to store a length of a value field in the delay measurement TLV 1200.

A data field (dataField) is used to store data announced by the delay measurement TLV 1200.

The delay measurement identifier is located in the tlvType field in the delay measurement TLV 1200. In this case, the delay measurement identifier is the tlvType identifier of the delay measurement TLV 1200. In this case, the delay measurement identifier further indicates that a TLV type of a TLV in which the delay measurement identifier is located is a delay measurement TLV. The PTP message 400 including the delay measurement TLV is a delay measurement function message. If the PTP message 400 does not include the delay measurement TLV, the PTP message 400 is not a delay measurement function message.

When the delay measurement identifier is located in the TLV type field in the delay measurement TLV 1200, the delay measurement identifier further indicates a message type of the PTP message. In a possible implementation, the delay measurement identifier corresponds to a plurality of values, the plurality of values are different, the plurality of values correspond to different message types, and the message types corresponding to the plurality of values are message types of PTP messages involved in at least one delay measurement mechanism. The PTP mechanism is used as an example. It is assumed that the plurality of values are respectively reserved values {000A, 000B, and 000C} of the tlvType field. As shown in FIG. 12, message types corresponding to 000A, 000B, and 000C are respectively Pdelay_Req, Pdelay_Resp, and Pdelay_Resp_Follow_Up. If the delay measurement identifier is 000A, the PTP message 400 is a Pdelay_Req_dm message. If the delay measurement identifier is 000B, the PTP message 400 is a Pdelay_Resp_dm message. If the delay measurement identifier is 000C, the PTP message 400 is a Pdelay_Resp_Follow_Up_dm message. The ETE mechanism is further used as an example. It is assumed that the plurality of values are respectively reserved values {000C, 000D, 000E, and 000F} of the tlvType field, where message types corresponding to 000C, 000D, 000E, and 000F are respectively Sync, Delay_Req, Delay_Resp, and Follow_Up. If the delay measurement identifier is 000C, the PTP message 400 is a Sync_dm message. If the delay measurement identifier is 000D, the PTP message 400 is a Delay_Req_dm message. If the delay measurement identifier is 000E, the PTP message 400 is a Delay_Resp_dm message. If the delay measurement identifier is 000F, the PTP message 400 is a Follow_Up_dm message.

The data announced by the value field of the delay measurement TLV 1200 depends on a message type indicated by the delay measurement identifier in the tlvType field, and the announced data includes a message body 402 of a delay measurement function message of the message type. As shown in FIG. 12, if the delay measurement identifier is 00A, indicating the Pdelay_Req_dm message, the value field includes the message body 402 of the Pdelay_Req_dm message in FIG. 9, if the delay measurement identifier is 00B, indicating the Pdelay_Resp_dm message, the value field includes the message body 402 of the Pdelay_Resp_dm message in FIG. 9, and if the delay measurement identifier is 00C, indicating the Pdelay_Resp_Follow_Up_dm message, the value field includes the message body 402 of the Pdelay_Resp_Follow_Up_dm message in FIG. 9. If the message type indicated by the delay measurement identifier is a message type involved in the ETE mechanism, the data announced by the value field includes a message body 402 of a delay measurement function message involved in the ETE mechanism. Details are not described herein again.

### 1.3.2 The delay measurement TLV is the vendor TLV supported by the PTP message 400.

In this case, the delay measurement TLV may be any vendor TLV that is supported by the PTP message and that is shown in FIG. 11, for example, an organization extension propagate (ORGANIZATION_EXTENSION_PROPAGATE) TLV for propagation of a tlv type (Type) whose value is 4000.

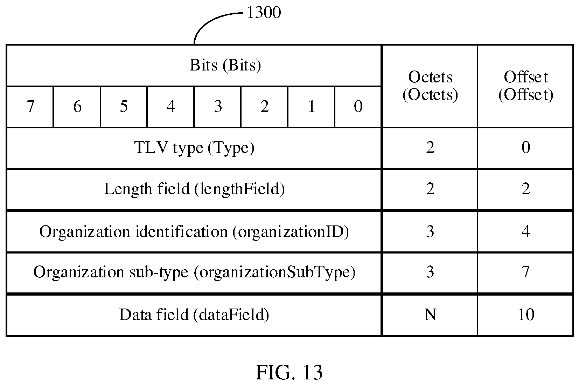

For example, the vendor TLV is a delay measurement TLV. A delay measurement TLV 1300 shown in FIG. 13 includes the following fields.

A TLV type (Type) field is used to store a tlvType identifier of the delay measurement TLV, where the tlvType identifier indicates that a TLV in which the tlvType identifier is located is a vendor TLV, for example, a value of the TLV type identifier is 4000.

A length field (lengthField) is used to store a length of a value field in the delay measurement TLV 1200.

An organization identification (organizationID) field is used to store an organization identification, where the organization identification is an identifier of a delay measurement TLV applied to a vendor.

An organization sub-type (organizationSubType) field is used to store a sub-type identifier in a range of the organization identifier field. A value of the sub-type identifier is assigned by a vendor or standard organization identified by the organization identifier.

A data field (dataField) is used to store data announced by the delay measurement TLV 1300.

The delay measurement identifier is located in the tlvType field in the delay measurement TLV 1300. In this case, the delay measurement identifier is the tlvType identifier of the delay measurement TLV 1300. A value of the delay measurement identifier is a reserved value of the tlvType field in the delay measurement TLV 1300. Because the tlvType field in the delay measurement TLV 1300 has only one reserved value, the delay measurement identifier only indicates that the PTP message is a delay function measurement message, and the message type is indicated by the message type identifier in the message header 402 of the PTP message. For example, the delay measurement identifier in the delay measurement TLV 1300 is 4000, and the message type identifier in the message header 402 is 0 (indicating that the message type is Sync). In this case, the PTP message 400 is a Sync_dm message.

The data announced by the data field in the delay measurement TLV 1300 depends on the message type indicated by the message type identifier in the message header 402. For example, the data announced by the data field in the delay measurement TLV 1300 includes a message body 402 of a delay measurement function message of the message type. This is similar to the data field in the delay measurement TLV 1200. Details are not described herein again.

### 2. Second message format of the PTP message

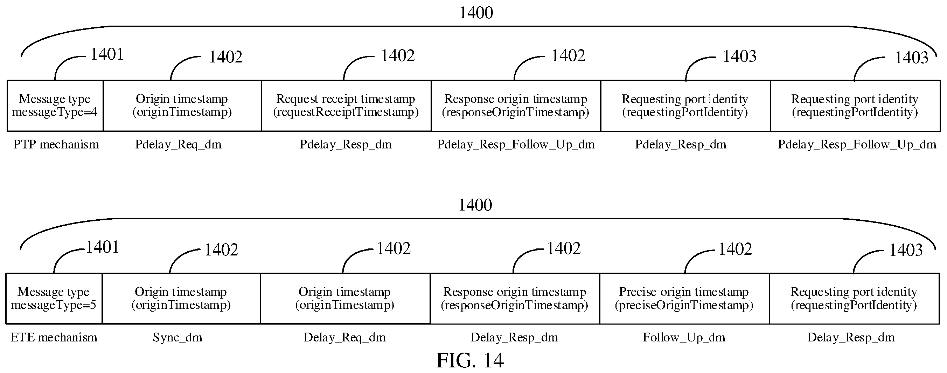

FIG. 14 is a diagram of a PTP message in a second message format according to an embodiment of this application. As shown in FIG. 14, the PTP message 1400 includes a message type (messageType) field 1401 and a plurality of timestamp fields 1402. A delay measurement identifier is located in the message type field 1401. The plurality of timestamp fields 1402 correspond to different delay measurement function messages, and each timestamp field 1402 is used to store a timestamp of a corresponding delay measurement function message.

The plurality of timestamp fields 1402 correspond to a same delay measurement mechanism, and the plurality of timestamp fields 1402 correspond to timestamp fields in delay measurement function messages in the delay measurement mechanism. As shown in FIG. 14, the PTP mechanism is used as an example. The plurality of timestamp fields 1402 are respectively an origin timestamp field in a Pdelay_Req_dm message, a request receipt timestamp field in a Pdelay_Resp_dm message, and a response origin timestamp field in a Pdelay_Resp_Follow_Up_dm message. The ETE mechanism is used as an example. The plurality of timestamp fields 1402 are respectively an origin timestamp field in a Sync_dm message, an origin timestamp field in a Delay_Req_dm message, a response origin timestamp field in a Delay_Resp_dm message, and a precise origin timestamp field in a Follow_Up_dm message.

In a possible implementation, the PTP message 1400 further includes at least one non-timestamp field 1403, where the non-timestamp field 1403 is a field in a message body 402 of each delay measurement function message in a corresponding delay measurement mechanism other than the timestamp fields. As shown in FIG. 14, the PTP mechanism is used as an example. Non-timestamp fields 1403 are a request port identifier field in the Pdelay_Resp_dm message and a request port identifier field in the Pdelay_Resp_Follow_Up_dm.

A length of the timestamp field 1402 and a length of the non-timestamp field 1403 in a same PTP message 1400 may be the same. For example, a length of each timestamp field 1402 and a length of each non-timestamp field 1403 each are 10 octets. Alternatively, a length of the timestamp field 1402 is different from a length of the non-timestamp field 1403. The lengths of the timestamp field 1402 and the non-timestamp field 1403 are not limited herein.

In FIG. 14, an arrangement manner of the timestamp field 1402 and/or the non-timestamp field 1403 in the PTP message 1400 is an example. The timestamp field 1402 and/or the non-timestamp field 1403 may alternatively be arranged in the PTP message 1400 in another arrangement manner. Herein, the arrangement manner of the timestamp field 1402 and/or the non-timestamp field 1403 in the PTP message 1400 is not limited.

The message type field 1401 may be the message type field in the message header 401 of the PTP message 400, and the delay measurement identifier is located in the message type field 1401 as the message type identifier. For a value setting manner of the delay measurement identifier and a definition of each value of the delay measurement identifier, refer to the delay measurement identifier when the delay measurement identifier is located in the message type field in 1.1.1. A difference lies in that in the PTP message 400, the delay measurement identifier may have two values, one value (for example, 4) indicates that the PTP message 400 is a delay measurement function message in the PTP mechanism, and the other value (for example, 5) indicates that the PTP message 400 is a delay measurement function message in the ETE mechanism.

Next, based on the communication system 100 described above, the method for processing a PTP message (for example, the PTP message 400 or the PTP message 1400) described above is described in detail.

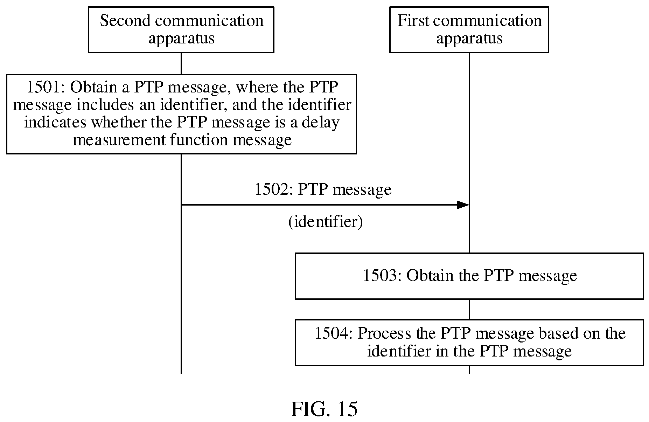

FIG. 15 is a flowchart of a method for processing a PTP message according to an embodiment of this application. The method is implemented by a first communication apparatus and a second communication apparatus through information exchange. The second communication apparatus is any communication apparatus in the communication system 100. For example, the second communication apparatus is any communication apparatus in the P2P network in the communication system 100. For another example, the second communication apparatus is any service bearing apparatus in the underlay network in the communication system 100. The first communication apparatus is a communication apparatus directly connected to the second communication apparatus in the communication system 100. For example, the communication apparatus 101 in FIG. 1 is the second communication apparatus, and the communication apparatus 102 is the first communication apparatus. For another example, the communication apparatus 101 in FIG. 2 and FIG. 3 is the second communication apparatus, and the service bearing apparatus 110 is the first communication apparatus. The method includes the following steps.

**1501: The second communication apparatus obtains a PTP message, where the PTP message includes an identifier, and the identifier indicates whether the PTP message is a delay measurement function message.**

The PTP message is any PTP message 400 or any PTP message 1400 described above. A message format of the PTP message is not limited herein. The identifier in the PTP message is the delay measurement identifier described above. The PTP message may be a PTP message sent by a fourth communication apparatus in the communication system to the second communication apparatus, or may be a PTP message generated by the second communication apparatus.

The following describes, by using the PTP message sent by the fourth communication apparatus as an example, a process of obtaining the PTP message.

The fourth communication apparatus is a communication apparatus directly connected to the second communication apparatus in the communication system 100. For example, the communication apparatus 101 in FIG. 1 is the fourth communication apparatus, and the communication apparatus 102 is the second communication apparatus. For another example, the communication apparatus 101 in FIG. 2 and FIG. 3 is the fourth communication apparatus, and the service bearing apparatus 110 is the second communication apparatus.

The fourth communication apparatus obtains the PTP message. A process in which the fourth communication apparatus obtains the PTP message is similar to the process in which the second communication apparatus obtains the PTP message. The fourth communication apparatus sends the obtained PTP message to the second communication apparatus, and the second communication apparatus receives the PTP message from the fourth communication apparatus, to obtain the PTP message. After receiving the PTP message from the fourth communication apparatus, the second communication apparatus processes the PTP message based on the identifier in the PTP message. For a processing process, refer to a process in which the first communication apparatus processes the PTP message based on the identifier in the PTP message in the following step 1504. Details are not described herein.

The following describes, by using the PTP message generated by the second communication apparatus as an example, a process of obtaining the PTP message.

In a time synchronization scenario, the second communication apparatus may be any communication apparatus in the communication system 100, and the PTP message generated by the second communication apparatus is not a delay measurement function message. For example, the second communication apparatus generates a PTP message in the foregoing first message format based on a local clock. An identifier in the PTP message indicates that the PTP message is not a delay measurement function message, and the identifier is located in a message header of the PTP message. Alternatively, the second communication apparatus generates a PTP message in the foregoing first message format. The PTP message does not include a delay measurement TLV, and a message header of the PTP message does not include the identifier. In this case, the PTP message is not a delay measurement function message, but a synchronization function message.

In a delay measurement scenario, assuming that the second communication apparatus is not a service bearing apparatus, for example, the second communication apparatus is a communication apparatus in the P2P network in the communication system 100, and then assuming that the second communication apparatus measures a link transmission delay between the second communication apparatus and an adjacent communication apparatus in the P2P network in a measurement mode in a delay measurement mechanism, the second communication apparatus generates a PTP message in the first message format or the second message format, where an identifier in the PTP message indicates that the PTP message is a delay measurement function message. In this case, a message type of the PTP message depends on the measurement mode in the delay measurement mechanism. For example, it is assumed that the measurement mode is a one step method mode or a two-step method mode in a PTP mechanism, the second communication apparatus is a delay measurement requester, and the PTP message is a Pdelay_Req_dm message, namely, a second delay measurement request message. For another example, it is assumed that the measurement mode is a one step method mode or a two-step method mode in an ETE mechanism, the second communication apparatus is a delay measurement requester, and the PTP message is a Sync_dm message, namely, a delay measurement synchronization message.

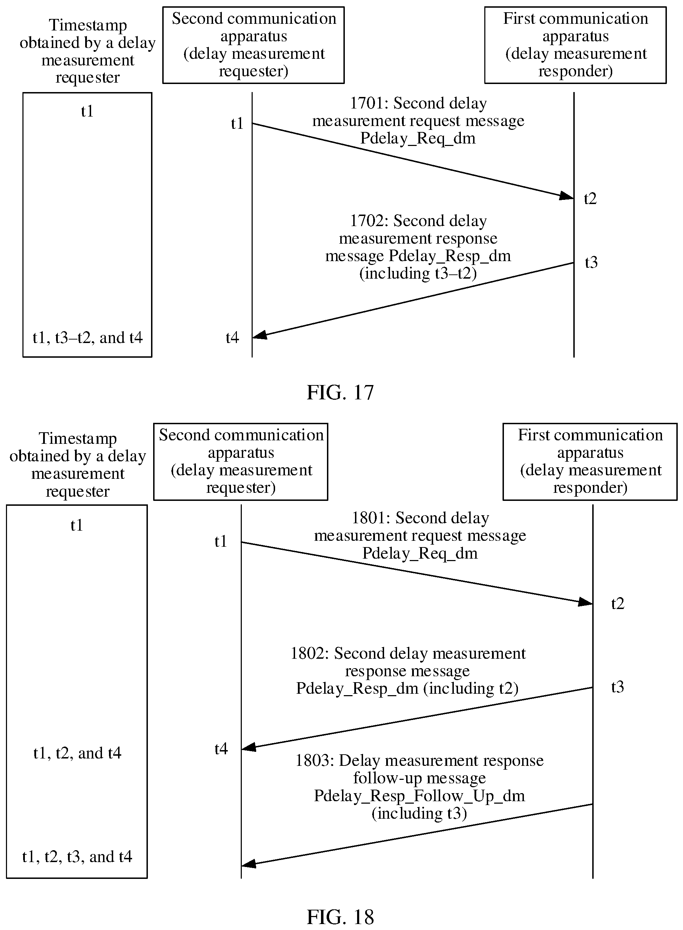

In the delay measurement scenario, the second communication apparatus performs delay measurement based on the generated PTP message. A process in which the second communication apparatus performs delay measurement is described in the following FIG. 17 to FIG. 20. Details are not described herein.

**1502: The second communication apparatus sends the PTP message.**

For example, the second communication apparatus sends the PTP message to the first communication apparatus.

**1503: The first communication apparatus obtains the PTP message from the second communication apparatus.**

After obtaining the PTP message, the first communication apparatus parses the PTP message, obtains the identifier from the PTP message, and then processes the PTP message based on the identifier, as described in the following step 1504.

**1504: The first communication apparatus processes the PTP message based on the identifier in the PTP message.**

The PTP message may be a delay measurement function message, or may not be a delay measurement function message. The first communication apparatus determines, based on an indication of the identifier, whether the PTP message is a delay measurement function message. For example, if the identifier indicates that the PTP message is a delay measurement function message, the first communication apparatus determines that the PTP message is the delay measurement function message; or if the identifier indicates that the PTP message is not a delay measurement function message, the first communication apparatus determines that the PTP message is not the delay measurement function message but a synchronization function message.

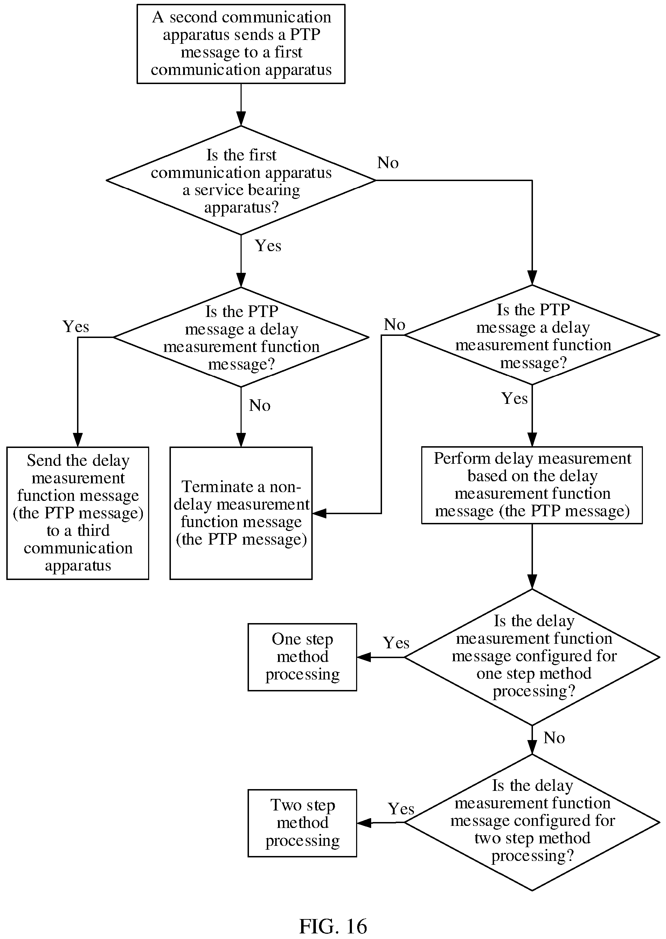

The first communication apparatus may be a service bearing apparatus, or may not be a service bearing apparatus. A manner in which the first communication apparatus processes the PTP message depends on two aspects: whether the PTP message is a delay measurement function message, and whether the first communication apparatus is a service bearing apparatus. The following describes a PTP message processing manner by using FIG. 16 as an example.

As shown in FIG. 16, for the PTP message sent by the second communication apparatus, when the first communication apparatus is the service bearing apparatus, if the PTP message is a delay measurement function message, the PTP message is a service message in the delay measurement scenario, the first communication apparatus sends the PTP message, for example, the first communication apparatus sends the PTP message to a third communication apparatus, and the third communication apparatus processes the PTP message based on the identifier in the PTP message. The third communication apparatus is a communication apparatus directly connected to the first communication apparatus in the communication system 100. The third communication apparatus may be a service bearing apparatus, or may not be a service bearing apparatus. For example, in FIG. 2 and FIG. 3, the service bearing apparatus 110 is the first communication apparatus, and the service bearing apparatus 120 is the third communication apparatus; or the service bearing apparatus 120 is the first communication apparatus, and the communication apparatus 102 is the third communication apparatus. A process in which the third communication apparatus processes the PTP message based on the identifier in the PTP message is similar to the process in which the first communication apparatus processes the PTP message based on the identifier in the PTP message. Details are not described herein again.

As shown in FIG. 16, when the first communication apparatus is the service bearing apparatus, if the PTP message is not a delay measurement function message, the first communication apparatus terminates the PTP message. FIG. 2 and FIG. 3 are still used as an example, it is assumed that the communication apparatus 101 is the second communication apparatus, and the service bearing apparatus 110 is the first communication apparatus. If a PTP message sent by the communication apparatus 101 is not a delay measurement function message, the service bearing apparatus 110 terminates the delay measurement function message.

As shown in FIG. 16, when the first communication apparatus is not the service bearing apparatus, if the PTP message is not a delay measurement function message, the first communication apparatus terminates the PTP message. FIG. 2 and FIG. 3 are still used as an example, it is assumed that the service bearing apparatus 120 is the second communication apparatus, and the communication apparatus 102 is the first communication apparatus. The service bearing apparatus 120 sends a PTP message to the communication apparatus 102. If the PTP message is not a delay measurement function message but a synchronization function message, the communication apparatus 102 terminates the PTP message. FIG. 1 is further used as an example. It is assumed that the communication apparatus 101 is the second communication apparatus, and the communication apparatus 102 is the first communication apparatus. The communication apparatus 101 sends a PTP message to the communication apparatus 102. If the PTP message is not a delay measurement function message but a synchronization function message, the communication apparatus 102 terminates the PTP message.

When the first communication apparatus is not the service bearing apparatus, if the PTP message is a delay measurement function message, the first communication apparatus performs delay measurement based on the PTP message, and measures a link transmission delay between the first communication apparatus and a PTP message generation apparatus. The PTP message generation apparatus is an apparatus for generating a PTP message. FIG. 1 to FIG. 3 are still used as an example. It is assumed that the PTP message is a delay measurement function message generated by the communication apparatus 101, and the first communication apparatus is the communication apparatus 102. In this case, the communication apparatus 101 is the PTP message generation apparatus, and the communication apparatus 102 performs delay measurement based on the PTP message.

When the first communication apparatus is not the service bearing apparatus, if the PTP message is a delay measurement function message, the first communication message determines, based on a message type of the PTP message, a delay measurement mechanism and a delay measurement mode to which the PTP message belongs, and performs delay measurement based on the delay measurement mode to which the PTP message belongs. FIG. 16 is still used as an example. If the message type of the PTP message is Pdelay_Req_dm, the PTP message is a Pdelay_Req_dm message, and a delay measurement mechanism to which the PTP message belongs is the PTP mechanism. If the message type of the PTP message is Sync_dm, the PTP message is a Sync_dm message, and a delay measurement mechanism to which the PTP message belongs is the ETE mechanism. For the delay measurement mechanism to which the PTP message belongs, if the first communication apparatus enables a one step method mode in the delay measurement mechanism, the PTP message is configured to be processed by using a one step method, and the first communication apparatus processes the PTP message in the one step method mode in the delay measurement mechanism; or if the first communication apparatus enables a two-step method mode in the delay measurement mechanism, the PTP message is configured to be processed by using a two-step method, and the first communication apparatus processes the PTP message in the two-step method mode in the delay measurement mechanism. For a same delay measurement mode in different measurement mechanisms, processing manners of the PTP message are different. The processing manners of the PTP message are subsequently described with reference to each delay measurement mode in the PTP mechanism and each delay measurement mode in the ETE mechanism in FIG. 17 to FIG. 20. Details are not described herein.

For the PTP message from the second communication apparatus, the foregoing describes the processing process of the PTP message by using an example in which it is determined whether the PTP message is a delay measurement function message based on the indication of the identifier in the PTP message. In another possible implementation, the first communication apparatus determines, depending on whether the identifier exists in the PTP message, whether the PTP message is a delay measurement function message. In this case, the identifier indicates that the PTP message is a delay measurement function message. For example, the first communication apparatus queries whether the identifier exists in the PTP message. If the identifier exists in the PTP message, it is determined that the PTP message is a delay measurement function message; or if the identifier does not exist in the PTP message, it is determined that the PTP message is not a delay measurement function message. For example, in a process of querying the identifier, the first communication apparatus first queries whether the identifier exists in a message header. If the identifier exists in the message header, the first communication apparatus obtains the identifier from the message header, or if the identifier does not exist in the message header, the first communication apparatus compares a message length in a message length field in the message header with an actual length of the PTP message. If the message length in the message length field is less than the actual length of the PTP message, it indicates that a TLV used as a suffix exists at a tail of the PTP message. If the TLV is a delay measurement TLV, a value of a tlvType field in the delay measurement TLV is the identifier, or if the TLV is not a delay measurement TLV, it indicates that the identifier does not exist in the PTP message. For this implementation, after determining whether the PTP message is a delay measurement function message, the first communication apparatus performs corresponding processing on the PTP message depending on whether the PTP message is a delay measurement function message. For example, if the PTP message is a delay measurement function message, the first communication apparatus processes the PTP message in a processing manner of the delay measurement function message in FIG. 16. If the PTP message is not a delay measurement function message, the first communication apparatus processes the PTP message in a processing manner of a non-delay measurement function message in FIG. 16.

The foregoing is described by using an example in which the first communication apparatus performs the step of determining whether the PTP message is a delay measurement function message. In another possible implementation, the first communication apparatus does not need to perform the step of determining whether the PTP message is a delay measurement function message, and processes the PTP message based on the indication of the identifier in the PTP message or depending on whether the identifier exists in the PTP message. For example, the identifier in the PTP message indicates whether the PTP message is a delay measurement function message. If the identifier indicates that the PTP message is a delay measurement function message, the first communication apparatus performs delay measurement function message processing on the PTP message. If the identifier indicates that the PTP message is not a delay measurement function message, the first communication apparatus performs synchronization function message processing on the PTP message. Further, an example in which the identifier in the PTP message indicates that the PTP message is a delay measurement function message is used. If the PTP message includes the identifier, the first communication apparatus performs delay measurement function message processing on the PTP message. If the PTP message does not include the identifier, the first communication apparatus performs synchronization function message processing on the PTP message.

According to the method shown in FIG. 15, an identifier in a PTP message indicates whether the PTP message is a delay measurement function message. A communication apparatus that receives the PTP message can process the PTP message based on the indication of the identifier. Because the communication apparatus can process delay measurement function messages, the communication apparatus is thereby enabled to support the delay measurement function.

For step 1504, when the PTP message obtained by the first communication apparatus is the delay measurement function message, it is assumed that the second communication apparatus is a PTP message generation apparatus, the first communication apparatus is an adjacent communication apparatus of the second communication apparatus in a PTP network, and the second communication apparatus is a delay measurement requester. The first communication apparatus serves as a delay measurement responder, and performs delay measurement with the second communication apparatus based on the PTP message. The PTP message may be a delay measurement function message involved in the PTP mechanism, or may be a delay measurement function message involved in the PTP mechanism. In different delay measurement mechanisms, processes in which the first communication apparatus performs delay measurement with the second communication apparatus based on the PTP message are different. Next, processes in which delay measurement is performed in a one step method mode and a two-step method mode in the PTP mechanism are separately described in the following delay measurement process 1 and delay measurement process 2, and processes in which delay measurement is performed in a one step method mode and a two-step method mode in the ETE mechanism are separately described in the following delay measurement process 3 and delay measurement process 4.

**Measurement process 1: Delay measurement is performed based on the PTP message in the one step method mode in the PTP mechanism. In this case, the PTP message received by the first communication apparatus is a second delay measurement request message, namely, a Pdelay_Req_dm message.**

FIG. 17 is a flowchart of exchanging a PTP message between adjacent communication apparatuses in a one step method mode in a PTP mechanism according to an embodiment of this application. The procedure includes the following steps.

**1701: A second communication apparatus sends a second delay measurement request message.**

The second delay measurement request message may be any Pdelay_Req_dm message described above, for example, the PTP message 400 whose delay measurement identifier is located in the message header 401, where the delay measurement identifier indicates that the PTP message is a Pdelay_Req_dm message, or the delay measurement identifier and the message type identifier in the message header jointly indicate that the PTP message is a Pdelay_Req_dm message; or for another example, the PTP message 1400 whose delay measurement identifier is 4 in the message type field.

The second communication apparatus generates the second delay measurement request message in a first message format or a second message format by using 0 as an origin timestamp in the Pdelay_Req_dm message, and sends the second delay measurement request message (for example, sends the second delay measurement request message to the first communication apparatus). The second delay measurement request message includes the origin timestamp and an identifier indicating that the PTP message is a delay measurement function message.

In the PTP mechanism, a delay measurement requester is responsible for determining a link transmission delay between the delay measurement requester and a delay measurement responder. The second communication apparatus serves as the delay measurement requester, and the second communication apparatus further stores a sending timestamp of the second delay measurement request at the local end. The sending timestamp indicates time at which the second communication apparatus sends the second delay measurement request, namely, sending time (for example, t1) of the second delay measurement request.

**1702: The first communication apparatus obtains the second delay measurement request message, and sends a second delay measurement response message in response to the second delay measurement request message.**

The second delay measurement response message may be any Pdelay_Resp_dm message described above, for example, the PTP message 400 whose delay measurement identifier is located in the message header 401, where the delay measurement identifier indicates that the PTP message is a Pdelay_Resp_dm message, or the delay measurement identifier and the message type identifier in the message header jointly indicate that the PTP message is a Pdelay_Resp_dm message; or for another example, the PTP message 1400 whose delay measurement identifier is 4 in the message type field.

After obtaining the second delay measurement request message, the first communication apparatus uses time at which the local end obtains the second delay measurement request message as receiving time of the second delay measurement request message, uses time at which the local end sends the second delay measurement response message as sending time of the second delay measurement response message, and determines duration between the sending time of the second delay measurement response message and the receiving time of the second delay measurement request message as processing duration of the second delay measurement request message at the local end. For example, the receiving time of the second delay measurement request message is t2, the sending time of the second delay measurement response message is t3, and the processing duration is equal to t3-t2.

The first communication apparatus generates the second delay measurement response message in the first message format or the second message format by using the processing duration as a request receipt timestamp in the Pdelay_Resp_dm message and using an identifier of a port used by the local end to send the second delay measurement response message as a request port identifier in the Pdelay_Resp_dm message, and sends the second delay measurement response message (for example, sends the second delay measurement response message to the second communication apparatus). The second delay measurement response message includes the request receipt timestamp, the request port identifier, and the identifier indicating that the PTP message is a delay measurement function message.

The second communication apparatus obtains the second delay measurement response message, and obtains the request receipt timestamp of the second delay measurement request message from the second delay measurement response message. The second communication apparatus further uses time at which the local end obtains the second delay measurement response message as receiving time of the second delay measurement response message, and obtains a receiving timestamp of the second delay measurement response message based on the receiving time, where the receiving timestamp indicates the receiving time. In this way, in the delay measurement process, the second communication apparatus obtains the following timestamps: the sending timestamp of the second delay measurement request message, the request receipt timestamp in the second delay measurement response request message, and the receiving timestamp of the second delay measurement response message.

The second communication apparatus determines a link transmission delay between the first communication apparatus and the second communication apparatus based on a timestamp of the second delay measurement request message and/or a timestamp of the second delay measurement response message. The link transmission delay may be a unidirectional link transmission delay, or may be an average link transmission delay.

The one step method mode in the PTP mechanism is applicable to measurement of the average link transmission delay. For example, the second communication apparatus determines the average link transmission delay based on the receiving timestamp of the second delay measurement response request message, the request receipt timestamp in the second delay measurement response request message, and the receiving timestamp of the second delay measurement response message according to the following formula (1): ${T}_{delay}^{1} = \frac{t 4 - t 1 - \left(t3-t2\right)}{2}$ (1). ${T}_{delay}^{1}$ is the average link transmission delay, *t*1 is the sending time indicated by the sending timestamp of the second delay measurement request, *t*3 *- t*2 is the processing duration of the first delay measurement request indicated by the request receipt timestamp, and *t*4 is the receiving time indicated by the receiving timestamp of the second delay measurement response.

The two-step method mode in the PTP mechanism is applicable to measurement of the average link transmission delay and the unidirectional link transmission delay, and is subsequently described with reference to FIG. 18. Details are not described herein.

In this embodiment of this application shown in FIG. 17, the step performed by the second communication apparatus is a process in which the second communication apparatus performs delay measurement based on the second delay measurement request message, and the step performed by the first communication apparatus is a process in which the first communication apparatus performs delay measurement based on the second delay measurement request message. The link transmission delay between the first communication apparatus and the second communication apparatus can be measured in the foregoing processes.

**Measurement process 2: Delay measurement is performed based on the PTP message in the two-step method mode in the PTP mechanism. In this case, the PTP message received by the first communication apparatus is a second delay measurement request message, namely, a Pdelay_Req_dm message.**

FIG. 18 is a flowchart of exchanging a PTP message between adjacent communication apparatuses in a two-step method mode in a PTP mechanism according to an embodiment of this application. The procedure includes the following steps.

**1801: A second communication apparatus sends a second delay measurement request message.**

Step 1801 is similar to step 1701. Details are not described herein again.

**1802: A first communication apparatus obtains the second delay measurement request message, and sends a second delay measurement response message in response to the second delay measurement request message.**

Step 1802 is similar to step 1702. A difference lies in that in step 1802, when the second delay measurement request message is generated, the first communication apparatus obtains a request receipt timestamp in the second delay measurement response message based on receiving time of the second delay measurement request. In this case, time indicated by the request receipt timestamp is the receiving time of the second delay measurement request, not processing duration of the second delay measurement request in the first communication apparatus, and the receiving time of the second delay measurement request is time (for example, t2) at which the first communication apparatus obtains the first delay measurement request.

A difference further lies in that after sending the second delay measurement response message, the first communication apparatus further performs the following step 1803.

**1803: The first communication apparatus sends a delay measurement response follow-up message for the second delay measurement response message.**

The delay measurement response follow-up message may be any Pdelay_Resp_Follow_Up_dm message described above, for example, the PTP message 400 whose delay measurement identifier is located in the message header 401, where the delay measurement identifier indicates that the PTP message is a Pdelay_Resp_Follow_Up_dm message, or the delay measurement identifier and the message type identifier in the message header jointly indicate that the PTP message is a Pdelay_Resp_Follow_Up_dm message; or for another example, the PTP message 1400 whose delay measurement identifier is 4 in the message type field.

The first communication apparatus uses time at which the second delay measurement response message is sent as sending time of the second delay measurement response message, determines a response origin timestamp in the Pdelay_Resp_Follow_Up_dm message based on the sending time, generates the delay measurement response follow-up message in the first message format or the second message format by using an identifier of a port through which the local end sends the second delay measurement response message as a request port identifier in the Pdelay_Resp_Follow_Up_dm message, and sends the delay measurement response follow-up message (for example, sends the delay measurement response follow-up message to the second communication apparatus). The delay measurement response follow-up message includes the precise origin timestamp, the request port identifier, and an identifier indicating that the PTP message is a delay measurement function message, and the response origin timestamp indicates the sending time (for example, t3) of the second delay measurement response message.

The second communication apparatus first obtains the second delay measurement response message, and then obtains the delay measurement response follow-up message. After obtaining the second delay measurement response message, the second communication apparatus obtains the request receipt timestamp in the second delay measurement response message as a receiving timestamp of the second delay measurement request message, and stores the receiving timestamp of the second delay measurement request at the local end. After obtaining the delay measurement response follow-up message, the second communication apparatus uses the response origin timestamp in the delay measurement response follow-up message as a receiving timestamp of the second delay measurement response message, and stores the receiving timestamp of the second delay measurement response message at the local end. In the delay measurement process, the second communication apparatus obtains the following timestamps: a sending timestamp and the receiving timestamp of the second delay measurement request, and a sending timestamp and the receiving timestamp of the second delay measurement response message. The second communication apparatus may determine a link transmission delay between the first communication apparatus and the second communication apparatus based on a timestamp of the second delay measurement request and/or a timestamp of the second delay measurement response message.

For example, the link transmission delay is an average link transmission delay. The second communication apparatus determines the average link transmission delay based on the sending timestamp and the receiving timestamp of the second delay measurement request and the sending timestamp and the receiving timestamp of the second delay measurement response message according to the foregoing formula (1). In this case, *t*2 and *t*3 in the foregoing formula (1) are respectively the receiving time indicated by the receiving timestamp of the second delay measurement request and the sending time indicated by the sending timestamp of the second delay measurement response message.

For example, the link transmission delay is a unidirectional link transmission delay. The second communication apparatus determines the unidirectional link transmission delay ${T}_{delay}^{2}$ based on the sending timestamp and the receiving timestamp of the second delay measurement request according to the following formula (2), or the second communication apparatus determines the unidirectional link transmission delay ${T}_{delay}^{2}$ based on the sending timestamp and the receiving timestamp of the second delay measurement response message according to the following formula (3): ${T}_{delay}^{2} = t 2 - t 1$ (2); or ${T}_{delay}^{2} = t 4 - t 3$ (3).

In this embodiment of this application shown in FIG. 18, the step performed by the second communication apparatus is a process in which the second communication apparatus performs delay measurement based on the second delay measurement request message, and the steps performed by the first communication apparatus are a process in which the first communication apparatus performs delay measurement based on the second delay measurement request message. The link transmission delay between the first communication apparatus and the second communication apparatus can be measured in the foregoing processes.

**Measurement process 3: Delay measurement is performed based on the PTP message in the one step method mode in the ETE mechanism. In this case, the PTP message received by the first communication apparatus is a delay measurement synchronization message, namely, a Sync_dm message.**

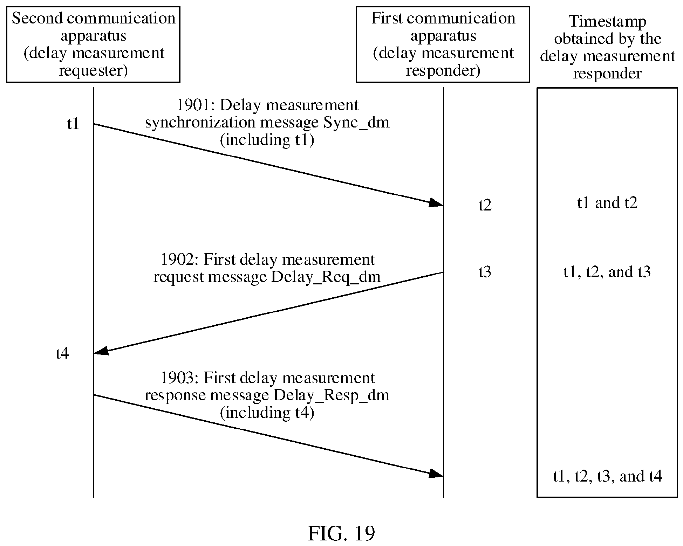

FIG. 19 is a flowchart of exchanging a PTP message between adjacent communication apparatuses in a one step method mode in an ETE mechanism according to an embodiment of this application. The procedure includes the following processes.

**1901: A second communication apparatus sends a delay measurement synchronization message.**

The delay measurement synchronization message may be any Sync_dm message described above, for example, the PTP message 400 whose delay measurement identifier is located in the message header 401, where the delay measurement identifier indicates that the PTP message is a Sync_dm message, or the delay measurement identifier and the message type identifier in the message header jointly indicate that the PTP message is a Sync_dm message; or for another example, the message 1400 whose delay measurement identifier is 5 in the message type field.

The second communication apparatus uses time at which the local end sends the delay measurement synchronization message as sending time of the delay measurement synchronization message, determines an origin timestamp in the Sync_dm message based on the sending time, generates the delay measurement synchronization message in a first message format or a second message format based on the origin timestamp, and sends the delay measurement synchronization message (for example, sends the delay measurement synchronization message to a first communication apparatus). The delay measurement synchronization message includes the origin timestamp and an identifier indicating that the PTP message is a delay measurement function message, and the origin timestamp indicates the sending time (for example, t1) of the delay measurement synchronization message.

In the ETE mechanism, a delay measurement responder determines a link transmission delay between a delay measurement requester and the delay measurement responder. As the delay measurement requester, the second communication apparatus does not need to locally store a timestamp in a delay measurement process, and the first communication apparatus stores the timestamp in the delay measurement process.

**1902: The first communication apparatus obtains the delay measurement synchronization message, and sends a first delay measurement request message in response to the delay measurement synchronization message.**

The first delay measurement request message may be any Delay_Req_dm message described above, for example, the PTP message 400 whose delay measurement identifier is located in the message header 401, where the delay measurement identifier indicates that the PTP message is a Delay_Req_dm message, or the delay measurement identifier and the message type identifier in the message header jointly indicate that the PTP message is a Delay_Req_dm message; or for another example, the PTP message 1400 whose delay measurement identifier is 5 in the message type field.

After obtaining the delay measurement synchronization message, the first communication apparatus uses the origin timestamp in the delay measurement synchronization message as a sending timestamp of the delay measurement synchronization message, and stores the sending timestamp at the local end, where the sending timestamp indicates the sending time of the delay measurement synchronization message. Time at which the local end obtains the delay measurement synchronization message is used as receiving time of the delay measurement synchronization message, and a receiving timestamp of the delay measurement synchronization message is determined based on the receiving time, where the receiving timestamp indicates the receiving time (for example, t2).

In response to the delay measurement synchronization message, the first communication apparatus generates the first delay measurement request message in the first message format or the second message format by using 0 as an origin timestamp in the Delay_Req_dm message and based on the origin timestamp, and sends the first delay measurement request message (for example, sends the first delay measurement request message to the second communication apparatus). The first delay measurement request message includes the origin timestamp and the identifier indicating that the PTP message is a delay measurement function message.

The first communication apparatus further uses time at which the local end sends the first delay measurement request message as sending time of the first delay measurement request message, generates a sending timestamp of the first delay measurement request message based on the sending time, and stores the sending timestamp at the local end, where the sending timestamp indicates the sending time (for example, t2).

**1903: The second communication apparatus obtains the first delay measurement request message, and sends a first delay measurement response message in response to the first delay measurement request message.**

The first delay measurement response message may be any Delay_Resp_dm described above, for example, the PTP message 400 whose delay measurement identifier is located in the message header 401, where the delay measurement identifier indicates that the PTP message is a Delay_Resp_dm message, or the delay measurement identifier and the message type identifier in the message header jointly indicate that the PTP message is a Delay_Resp_dm message; or for another example, the PTP message 1400 whose delay measurement identifier is 5 in the message type field.

In response to the obtained first delay measurement request message, the second communication apparatus uses time at which the local end obtains the first delay measurement request message as receiving time of the first delay measurement request message, determines a response origin timestamp in the Delay_Resp_dm message based on the receiving time, generates the first delay measurement response message in the first message format or the second message format by using an identifier of a port through which the local end obtains the first delay measurement request message as a request port identifier in the Delay_Resp_dm message, and sends the first delay measurement response message (for example, sends the first delay measurement response message to the first communication apparatus). The first delay measurement response message includes the response origin timestamp, the request port identifier, and the identifier indicating that the PTP message is a delay measurement function message, and the response origin timestamp indicates the receiving time (for example, t4) of the first delay measurement request message.

After the first communication apparatus obtains the first delay measurement response message, the first communication apparatus uses the response origin timestamp in the first delay measurement response message as a receiving timestamp of the first delay measurement request message, and stores the receiving timestamp at the local end. In this way, in the delay measurement process, the first communication apparatus obtains the following timestamps: the sending timestamp and the receiving timestamp of the delay measurement synchronization request, and the sending timestamp and the receiving timestamp of the first delay measurement request message.

The first communication apparatus determines a link transmission delay between the first communication apparatus and the second communication apparatus based on a timestamp of the delay measurement synchronization request and/or a timestamp of the first delay measurement request message. For example, time indicated by the sending timestamp of the delay measurement synchronization request is *t*1 in the formula (1) to the formula (3), and time indicated by the receiving timestamp of the delay measurement synchronization request is *t*2 in the formula (1) to the formula (3), time indicated by the sending timestamp of the first delay measurement request message is *t*3 in the formula (1) to the formula (3), and time indicated by the receiving timestamp of the first delay measurement request message is *t*4 in the formula (1) to the formula (3). An average link transmission delay between the first communication apparatus and the second communication apparatus is determined according to the foregoing formula (1), or a unidirectional link transmission delay between the first communication apparatus and the second communication apparatus is determined according to the foregoing formula (2) or formula (3).

In this embodiment of this application shown in FIG. 19, the steps performed by the second communication apparatus are a process in which the second communication apparatus performs delay measurement based on the delay measurement synchronization request, and the step performed by the first communication apparatus is a process in which the first communication apparatus performs delay measurement based on the delay measurement synchronization request. The link transmission delay between the first communication apparatus and the second communication apparatus can be measured in the foregoing processes.

**Measurement process 4: Delay measurement is performed based on the PTP message in the two-step method mode in the ETE mechanism. In this case, the PTP message received by the first communication apparatus is a delay measurement synchronization message, namely, a Sync_dm message.**

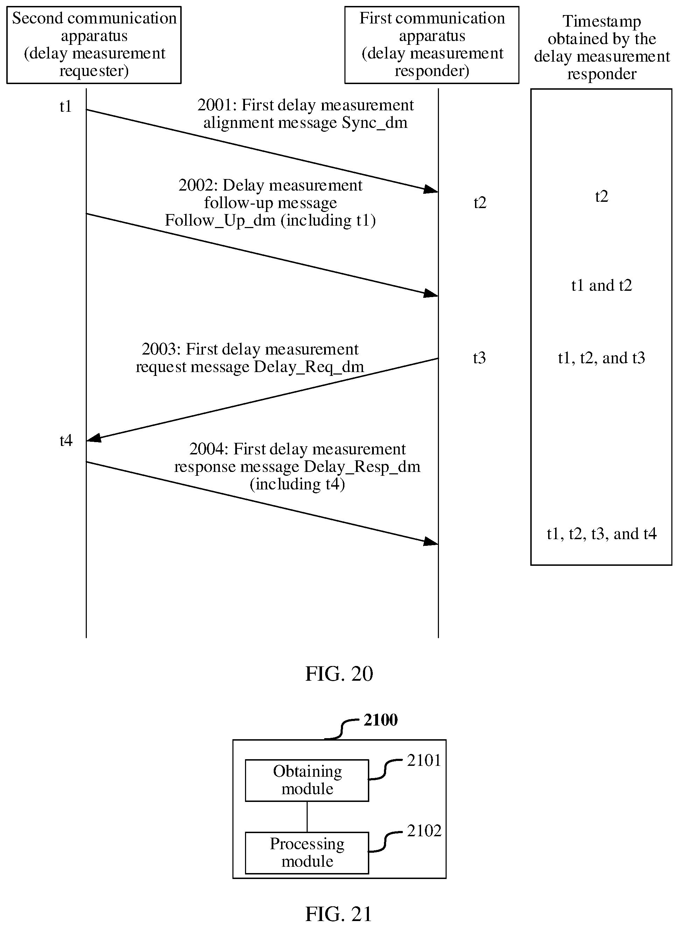

FIG. 20 is a flowchart of exchanging a PTP message between adjacent communication apparatuses in a two-step method mode in an ETE mechanism according to an embodiment of this application. The procedure includes the following processes.

**2001: A second communication apparatus sends a delay measurement synchronization message.**

Step 2001 is similar to step 1901. A difference lies in that in step 2001, a value of an origin timestamp in the delay measurement synchronization message is 0, and sending time of the delay measurement synchronization message is notified to the first communication apparatus by using a delay measurement response follow-up message (for example, the following step 2002). Details of step 2001 are not described herein.

**2002: The second communication apparatus sends the delay measurement follow-up message for the delay measurement synchronization message.**

The delay measurement follow-up message may be any Follow_Up_dm message described above, for example, the PTP message 400 whose delay measurement identifier is located in the message header 401, where the delay measurement identifier indicates that the PTP message is a Follow_Up_dm message, or the delay measurement identifier and the message type identifier in the message header jointly indicate that the PTP message is a Follow_Up_dm message; or for another example, the PTP message 1400 whose delay measurement identifier is 5 in the message type field.

The second communication apparatus uses time at which the local end sends the delay measurement synchronization message as sending time of the delay measurement synchronization message, determines a precise origin timestamp in the Follow_Up_dm based on the sending time, generates the delay measurement follow-up message in a first message format or a second message format based on the precise timestamp, and sends the delay measurement follow-up message (for example, sends the delay measurement follow-up message to a first communication apparatus). The delay measurement follow-up message includes the precise origin timestamp and an identifier indicating that the PTP message is a delay measurement function message, and the precise origin timestamp indicates the sending time (for example, t1) of the delay measurement synchronization message.

**2003: The first communication apparatus obtains the delay measurement synchronization message and the delay measurement follow-up message, and sends a first delay measurement request message in response to the delay measurement synchronization message.**

Step 2003 is similar to step 1902. A difference lies in that, after obtaining the delay measurement synchronization message, the first communication apparatus further obtains the delay measurement follow-up message, uses the precise origin timestamp in the delay measurement follow-up message as a receiving timestamp of the delay measurement synchronization message, and stores the receiving timestamp at the local end.

**2004: The second communication apparatus obtains the first delay measurement request message, and sends a first delay measurement response message in response to the first delay measurement request message.**

Step 2004 is similar to step 1903, and is similar to the delay measurement process shown in FIG. 19. In the delay measurement process shown in FIG. 20, the first communication apparatus obtains the following timestamps: the sending timestamp and the receiving timestamp of the delay measurement synchronization request, and the sending timestamp and the receiving timestamp of the first delay measurement request message, so that the first communication apparatus performs the step of determining the link transmission delay between the first communication apparatus and the second communication apparatus based on the timestamp of the delay measurement synchronization request and/or the timestamp of the first delay measurement request message in step 1903. Details are not described herein again.

In this embodiment of this application shown in FIG. 20, the steps performed by the second communication apparatus are a process in which the second communication apparatus performs delay measurement based on the delay measurement synchronization request, and the step performed by the first communication apparatus is a process in which the first communication apparatus performs delay measurement based on the delay measurement synchronization request. The link transmission delay between the first communication apparatus and the second communication apparatus can be measured in the foregoing processes.

FIG. 17 to FIG. 20 are all described by using an example in which the first communication apparatus and the second communication apparatus are directly connected adjacent communication apparatuses in a P2P network. When the first communication apparatus and the second communication apparatus are connected through a service bearing apparatus, for all the delay measurement function messages sent by the first communication apparatus in FIG. 17 to FIG. 20, the first communication apparatus does not send the delay measurement function messages to the second communication apparatus, but sends the delay measurement function messages to the service bearing apparatus connected to the first communication apparatus, and the service bearing apparatus between the first communication apparatus and the second communication apparatus sends the delay measurement function messages of the first communication apparatus to the second communication apparatus, so that the second communication apparatus responds to the delay measurement function messages. For all the delay measurement function messages sent by the second communication apparatus in FIG. 17 to FIG. 20, the second communication apparatus does not send the delay measurement function messages to the first communication apparatus, but sends the delay measurement function messages to the service bearing apparatus connected to the second communication apparatus, and the service bearing apparatus between the first communication apparatus and the second communication apparatus sends the delay measurement function messages of the second communication apparatus to the first communication apparatus, so that the second communication apparatus responds to the delay measurement function messages.

It can be learned from the foregoing descriptions that, for a delay measurement function message sent by any communication apparatus in the P2P network in the communication system 100, in a direct connection scenario, the delay measurement function message is directly sent to an adjacent communication apparatus of the communication apparatus in the P2P network, and in an indirect connection scenario, the delay measurement function message is forwarded to the adjacent communication apparatus through a service bearing apparatus. After obtaining the delay measurement function message, the adjacent communication apparatus performs delay measurement based on the delay measurement function message.

The foregoing method embodiments are described by using an example in which different communication apparatuses directly send PTP messages. In a scenario of sending a PTP message, a communication apparatus may further encapsulate the PTP message into a MAC packet, and send the PTP message by sending the MAC packet. Any communication apparatus in the communication system 100 is used as an example. For any to-be-sent PTP message, the communication apparatus generates a MAC packet based on the PTP message, where the MAC packet includes the PTP message, in this case, the PTP message is a payload of the MAC packet, and the PTP message includes a delay measurement identifier. The communication apparatus sends the MAC packet, and a communication apparatus that receives the MAC packet obtains the PTP message from the MAC packet, and performs processing (for example, termination processing or delay measurement) on the PTP message based on the identifier in the PTP message.

The foregoing is described by using an example in which the identifier in the PTP message indicates whether the PTP message is a delay measurement function message. In another possible implementation, the identifier indicates whether the PTP message is a synchronization function message. A communication apparatus that receives the PTP message may also process the PTP message based on the identifier. A processing manner of the PTP message is similar to that in the foregoing method embodiments. For example, when the communication apparatus is located in the P2P network in the communication system 100, if the identifier indicates that the PTP message is a synchronization function message, the communication apparatus terminates the PTP message; or if the identifier indicates that the PTP message is not a synchronization function message, the communication apparatus performs corresponding processing (for example, performs delay measurement) based on the PTP message. When the communication apparatus is a service bearing apparatus in the communication system 100, if the identifier indicates that the PTP message is a synchronization function message, the communication apparatus terminates the PTP message; or if the identifier indicates that the PTP message is not a synchronization function message, the communication apparatus sends the PTP message to another communication apparatus connected to the communication apparatus.

The method in embodiments of this application is described above. An apparatus in embodiments of this application is described below. It should be understood that the apparatus described below has any function of the communication apparatus in the foregoing methods. The foregoing describes in detail the method for processing a PTP message and the method for sending a PTP message according to embodiments of this application with reference to FIG. 15 to FIG. 20. Based on a same inventive concept, the following describes apparatuses used in the foregoing methods with reference to FIG. 21 to FIG. 24. It should be understood that the technical features described in the method embodiments are also applied to the following apparatus embodiments.

FIG. 21 is a diagram of a structure of an apparatus for processing a PTP message according to an embodiment of this application. As shown in FIG. 21, the apparatus 2100 includes:
an obtaining module 2101, configured to obtain a PTP message from a second communication apparatus, where the PTP message includes an identifier, and the identifier indicates whether the PTP message is a delay measurement function message; and
a processing module 2102, configured to process the PTP message based on the identifier.

In a possible implementation, the processing module 2102 is configured to: if the identifier indicates that the PTP message is not a delay measurement function message, terminate the PTP message; or if the identifier indicates that the PTP message is a delay measurement function message, send the PTP message.

In a possible implementation, the processing module 2102 includes:
a termination unit, configured to terminate the PTP message if the identifier indicates that the PTP message is not a delay measurement function message; and
a measurement unit, configured to perform delay measurement based on the PTP message if the identifier indicates that the PTP message is a delay measurement function message.

In a possible implementation, the PTP message is a synchronization message that is involved in a delay request-response mechanism and includes the identifier, and the measurement unit is configured to:
send a first delay measurement request message in response to the PTP message, where the first delay measurement request message is a delay request message that is involved in the delay request-response mechanism and includes the identifier; obtain a first delay measurement response message to the first delay measurement request message, where the first delay measurement response message is a delay response message that is involved in the delay request-response mechanism and includes the identifier, and the first delay measurement response message includes a timestamp of the first delay measurement request message; and determine a link transmission delay between a first communication apparatus and the second communication apparatus based on a timestamp of the PTP message and/or the timestamp of the first delay measurement request message.

In a possible implementation, the measurement unit is further configured to obtain a delay measurement follow-up message for the PTP, where the delay measurement follow-up message is a follow-up message that is involved in the delay request-response mechanism and includes the identifier, and the delay measurement follow-up message includes the timestamp of the PTP message.

In a possible implementation, the PTP message is a delay request message that is involved in a peer-to-peer delay mechanism and includes the identifier, and the measurement unit is configured to send a second delay measurement response message in response to the PTP message, where the second delay measurement response message is a delay response message that is involved in the peer-to-peer delay mechanism and includes the identifier.

In a possible implementation, the measurement unit is further configured to send a delay measurement response follow-up message for the second delay measurement response message, where the delay measurement response follow-up message is a delay response follow-up message that is involved in the peer-to-peer delay mechanism and includes the identifier, and the delay measurement response follow-up message includes a timestamp of the second delay measurement response message.

In a possible implementation, the PTP message includes a domain number field, a message type field, and a flag field, and the identifier is located in any one of the domain number field, the message type field, or the flag field.

In a possible implementation, the PTP message includes a message type field and a plurality of timestamp fields, the identifier is located in the message type field, the plurality of timestamp fields correspond to different delay measurement function messages, and each timestamp field is used to store a timestamp of a corresponding delay measurement function message.

In a possible implementation, the PTP message includes a domain number field, a message type field, and a flag field, the identifier includes a first sub-identifier and a second sub-identifier, and the first sub-identifier and the second sub-identifier are located in different ones of the domain number field, the message type field, and the flag field; and if either the first sub-identifier or the second sub-identifier is located in the domain number field, the sub-identifier indicates whether the PTP message is a delay measurement function message; if either the first sub-identifier or the second sub-identifier is located in the message type field, the sub-identifier indicates a message type of the PTP message and indicates that the PTP message is a delay measurement function message; or if either the first sub-identifier or the second sub-identifier is located in the flag field, the sub-identifier indicates whether the PTP message is a delay measurement function message.

In a possible implementation, the PTP message includes a domain number field, a message type field, and a flag field, and the identifier includes a first sub-identifier, a second sub-identifier, and a third sub-identifier; the first sub-identifier is located in the domain number field, and the first sub-identifier indicates whether the PTP message is a delay measurement function message; the second sub-identifier is located in the message type field, and the second sub-identifier indicates a message type of the PTP message and indicates that the PTP message is a delay measurement function message; and the third sub-identifier is located in the flag field, and the third sub-identifier indicates whether the PTP message is a delay measurement function message.

In a possible implementation, the PTP message includes a delay measurement type length value TLV, and the identifier is located in a type field in the delay measurement TLV.

In a possible implementation, the delay measurement TLV is a reserved TLV or a vendor TLV supported by the PTP message.

In a possible implementation, the identifier is a reserved value of the field in which the identifier is located.

The apparatus 2100 corresponds to the first communication apparatus in the foregoing method embodiments. The apparatus 2100 may be configured as the first communication apparatus or a part of the first communication apparatus. In other words, the apparatus 2100 is used in the first communication apparatus. The modules in the apparatus 2100 and the foregoing other operations and/or functions are respectively used to implement the steps and methods implemented by the first communication apparatus in the method embodiments. For details, refer to the foregoing method embodiments. For brevity, details are not described herein again.

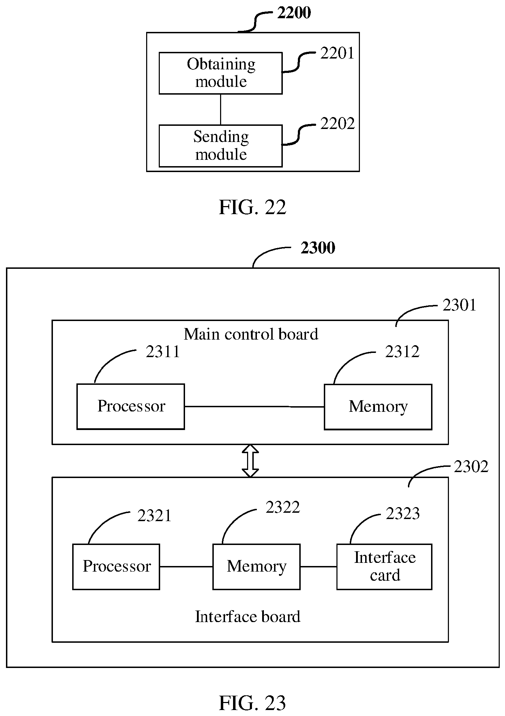

FIG. 22 is a diagram of a structure of an apparatus for sending a PTP message according to an embodiment of this application. As shown in FIG. 22, the apparatus 2200 includes:
an obtaining module 2201, configured to obtain a PTP message, where the PTP message includes an identifier, and the identifier indicates whether the PTP message is a delay measurement function message; and
a sending module 2202, configured to send the PTP message.

In a possible implementation, the identifier indicates that the PTP message is a delay measurement function message, and the PTP message is a synchronization message that is involved in a delay request-response mechanism and includes the identifier.

The obtaining module 2201 is further configured to obtain a first delay measurement request message for the PTP message, where the first delay measurement request message is a delay request message that is involved in the delay request-response mechanism and includes the identifier.

The sending module 2202 is further configured to send a second delay measurement response message in response to the first delay measurement request message, where the second delay measurement response message is a delay response message that is involved in the delay request-response mechanism and includes the identifier.

In a possible implementation, the sending module 2202 is further configured to send a delay measurement follow-up message for the delay measurement synchronization message, where the delay measurement follow-up message is a follow-up message that is involved in the delay request-response mechanism and includes the identifier.

In a possible implementation, the identifier indicates that the PTP message is a delay measurement function message, the PTP message is a delay request message that is involved in a peer-to-peer delay mechanism and includes the identifier, and the apparatus 2200 further includes a determining module.

The obtaining module 2201 is further configured to obtain a second delay measurement response message for the PTP message, where the second delay measurement response message is a delay response message that is involved in the peer-to-peer delay mechanism and includes the identifier.

The determining module is configured to determine a link transmission delay between a first communication apparatus and a second communication apparatus based on a timestamp of the PTP message and/or a timestamp of the second delay measurement response message.

In a possible implementation, the obtaining module 2201 is further configured to obtain a delay measurement response follow-up message for the second delay measurement response message, where the delay measurement response follow-up message is a delay response follow-up message that is involved in the peer-to-peer delay mechanism and includes the identifier, and the delay measurement response follow-up message includes the timestamp of the second delay measurement response message.

In a possible implementation, the PTP message includes a domain number field, a message type field, and a flag field, and the identifier is located in any one of the domain number field, the message type field, or the flag field.

In a possible implementation, the PTP message includes a message type field and a plurality of timestamp fields, the identifier is located in the message type field, the plurality of timestamp fields correspond to different delay measurement function messages, and each timestamp field is used to store a timestamp of a corresponding delay measurement function message.

In a possible implementation, the PTP message includes a domain number field, a message type field, and a flag field, the identifier includes a first sub-identifier and a second sub-identifier, and the first sub-identifier and the second sub-identifier are located in different ones of the domain number field, the message type field, and the flag field; and if either the first sub-identifier or the second sub-identifier is located in the domain number field, the sub-identifier indicates whether the PTP message is a delay measurement function message; if either the first sub-identifier or the second sub-identifier is located in the message type field, the sub-identifier indicates a message type of the PTP message and indicates that the PTP message is a delay measurement function message; or if either the first sub-identifier or the second sub-identifier is located in the flag field, the sub-identifier indicates whether the PTP message is a delay measurement function message.

In a possible implementation, the PTP message includes a domain number field, a message type field, and a flag field, and the identifier includes a first sub-identifier, a second sub-identifier, and a third sub-identifier; the first sub-identifier is located in the domain number field, and the first sub-identifier indicates whether the PTP message is a delay measurement function message; the second sub-identifier is located in the message type field, and the second sub-identifier indicates a message type of the PTP message and indicates that the PTP message is a delay measurement function message; and the third sub-identifier is located in the flag field, and the third sub-identifier indicates whether the PTP message is a delay measurement function message.

In a possible implementation, the PTP message includes a delay measurement type length value TLV, and the identifier is located in a type field in the delay measurement TLV.

In a possible implementation, the delay measurement TLV is a reserved TLV or a vendor TLV supported by the PTP message.

In a possible implementation, the identifier is a reserved value of the field in which the identifier is located.

The apparatus 2200 corresponds to the second communication apparatus in the foregoing method embodiments. The apparatus 2200 may be configured as the second communication apparatus or a part of the second communication apparatus. In other words, the apparatus 2200 is used in the first communication apparatus. The modules in the apparatus 2200 and the foregoing other operations and/or functions are respectively used to implement the steps and methods implemented by the second communication apparatus in the method embodiments. For details, refer to the foregoing method embodiments. For brevity, details are not described herein again.

When either the apparatus 2100 or the apparatus 2200 processes a PTP message, division of the foregoing functional modules is merely used as an example for description. In actual application, the foregoing functions may be allocated to different functional modules for implementation based on a requirement. In other words, an internal structure of the apparatus is divided into different functional modules, to implement all or some of the foregoing functions. In addition, the apparatuses provided in the foregoing embodiments and the foregoing method embodiments pertain to a same concept. For a specific implementation process, refer to the foregoing method embodiments. Details are not described herein again.

Both the first communication apparatus and the second communication apparatus are communication devices. The following separately describes structures of the communication devices with reference to FIG. 22 and FIG. 23.

FIG. 23 is a diagram of a structure of a communication device according to an embodiment of this application. As shown in FIG. 23, the communication device 2300 includes a main control board 2301 and an interface board 2302.

The main control board 2301 is also referred to as a main processing unit (main processing unit, MPU) or a route processor card (route processor card). The main control board 2301 controls and manages components in the communication device 2300, including functions of route calculation, device management, device maintenance, and protocol processing. As shown in FIG. 23, the main control board 2301 includes a processor 2311 and a memory 2312. The processor 2311 is configured to invoke program code in the memory of the main control board, to perform the method for processing a PTP message or the method for sending a PTP message provided in the method embodiments of this application. The processor 2311 is configured to invoke the program code in the memory 2322, to perform the method for processing a PTP message or the method for sending a PTP message provided in the method embodiments of this application.

The interface board 2302 is also referred to as a line interface unit card (line processing unit, LPU), a line card (line card), or a service board. The interface board 2302 is configured to provide various service interfaces and forward a PTP message or a data packet. The service interfaces include but are not limited to an Ethernet interface, a POS (Packet over SONET/SDH) interface, and the like. The Ethernet interface is, for example, a flexible Ethernet service interface (Flexible Ethernet Clients, FlexE Clients).

As shown in FIG. 23, the interface board 2302 includes a processor 2321, a memory 2322, and an interface card 2323. The processor 2321 is configured to control and manage the interface board 2302 and communicate with the processor 2311. For example, the processor 2321 is configured to invoke program code in the memory 2322, to receive and send a PTP message or a data packet. The processor 2321 is configured to invoke the program code in the memory of the main control board, to execute the flexible Ethernet clients, FlexE clients, provided in the method embodiments of this application. For example, if the electronic device 2300 is an electronic device and is configured as an edge network device in an autonomous domain, the processor 2321 is configured to invoke the program code in the memory 2322, to further perform the method for processing a PTP message or the method for sending a PTP message provided in the method embodiments of this application.

The interface card 2323 is configured to implement an interconnection function of a physical layer. Original traffic enters the interface board 2302 from the interface card 2323, and a processed data packet is sent from the interface card 2323. The interface card 2323 includes at least one physical interface. The physical interface is also referred to as a physical port, and can be used as an external interface or an internal interface in a network device. The interface card 2323 is also referred to as a subcard, and may be mounted on the interface board 2302.

The main control board 2301 is coupled to the interface board 2302. For example, the main control board 2301 and the interface board 2302 are connected to a system backplane through a system bus to implement interworking. In a possible implementation, an inter-process communication (inter-process communication, IPC) channel is established between the main control board 2301 and the interface board 2302, and the main control board 2301 communicates with the interface board 2302 through the IPC channel.

There may be one or more main control boards 2301. When there are a plurality of main control boards, the main control boards may include an active main control board and a standby main control board. There may be one or more interface boards 2302. A stronger data processing capability of the communication device 2300 indicates a larger quantity of provided interface boards 2302. There may also be one or more interface cards 2323 on the interface board 2302. In a distributed forwarding architecture, the communication device 2300 may have at least one switching board, and data exchange between a plurality of interface boards 2302 is implemented by using the switching board, to provide a large-capacity data exchange and processing capability. Therefore, a data access and processing capability of the network device in the distributed architecture is higher than that of a device in a centralized architecture. Optionally, the communication device 2300 may alternatively be in a form in which there is only one card. To be specific, there is no switching board, and functions of the interface board and the main control board are integrated on the card. In this case, the processor on the interface board and the processor on the main control board may be combined to form a central processing unit on the card, to perform functions obtained by combining the processors. This form of device (for example, a network device such as a low-end switch or a router) has a weak data exchange and processing capability. A specific architecture that is to be used depends on a specific networking deployment scenario. This is not limited herein.

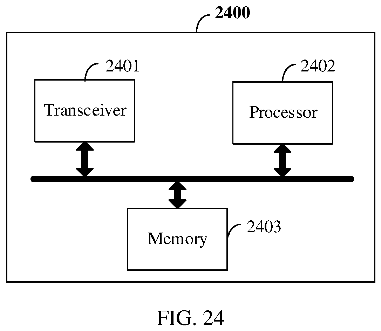

FIG. 24 is a diagram of a structure of another communication device according to an embodiment of this application. As shown in FIG. 24, the communication device 2400 includes a transceiver 2401, a processor 2402, and a memory 2403. The transceiver 2401 is configured to receive and send a data packet, a PTP message, data information, an announce packet, or the like.

The processor 2402 is configured to perform related steps performed by the first communication apparatus or the second communication apparatus in the foregoing method embodiments. The processor 2402 may include one or more processing cores. The processor 2402 may be implemented in at least one hardware form of digital signal processing (digital signal processing, DSP), a field programmable gate array (field programmable gate array, FPGA), or a programmable logic array (programmable logic array, PLA). The processor 2402 may further include a main processor and a coprocessor. The main processor is a processor configured to process data in a wake-up state, and is also referred to as a central processing unit (central processing unit, CPU). The coprocessor is a low power consumption processor configured to process data in a standby state.

The memory 2403 may include one or more computer-readable storage media. The computer-readable storage media may be non-transient. The memory 2403 further includes a highspeed random access memory and a non-volatile memory, for example, one or more magnetic disk storage devices or flash memory storage devices. In some embodiments, the non-transient computer-readable storage medium in the memory 2403 is configured to store at least one piece of program code, and the at least one piece of program code is executed by the processor 2402 to implement the method for processing a PTP message or the method for sending a PTP message provided in the method embodiments of this application.

In an example embodiment, a computer-readable storage medium is further provided, for example, a memory including program code. The program code may be executed by a processor in a communication device to complete the method for processing a PTP message or the method for sending a PTP message in the foregoing embodiments. For example, the computer-readable storage medium is a non-transient computer-readable storage medium, such as a read-only memory (read-only memory, ROM), a random access memory (random access memory, RAM), a compact disc read-only memory (compact disc read-only memory, CD-ROM), a magnetic tape, a floppy disk, or an optical data storage device.

An embodiment of this application further provides a computer program product or a computer program. The computer program product or the computer program includes program code. The computer instructions are stored in a computer-readable storage medium. A processor in a communication device reads the program code from the computer-readable storage medium, and the processor executes the program code, so that the communication device performs the foregoing method for processing a PTP message or method for sending a PTP message.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the method for processing a PTP message or the method for sending a PTP message in the foregoing method embodiments.

The apparatus, the device, the computer-readable storage medium, the computer program product, and the chip provided in embodiments are all configured to perform the corresponding methods provided above. Therefore, for beneficial effects that can be achieved, refer to the beneficial effects of the corresponding methods provided above. Details are not described herein again.

In the several embodiments provided in this application, it should be understood that the disclosed apparatus and method may be implemented in other manners. For example, the described apparatus embodiments are merely an example. For example, the division into modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, a word such as "example" or "for example" is used to represent giving an example, an illustration, or a description. Any embodiment or design solution described as an "example" or "for example" in this application should not be explained as being more preferred or having more advantages than another embodiment or design solution. To be precise, use of the word such as "example" or "for example" is intended to present a relative concept in a specific manner.

It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions. For example, all the PTP messages in this application are obtained under full authorization.

All of the foregoing technical solutions may form optional embodiments of this disclosure through any combination. Details are not described herein again.

The foregoing descriptions are merely optional embodiments of this application, but are not intended to limit this application. Any modification, equivalent replacement, or improvement made without departing from the spirit and principle of this application should fall within the protection scope of this application.

## Claims

1. A method for processing a precision time protocol PTP message, wherein the method is performed by a first communication apparatus, and the method comprises:
obtaining a PTP message from a second communication apparatus, wherein the PTP message comprises an identifier, and the identifier indicates whether the PTP message is a delay measurement function message; and
processing the PTP message based on the identifier.

2. The method according to claim 1, wherein the processing the PTP message based on the identifier comprises:
if the identifier indicates that the PTP message is not a delay measurement function message, terminating the PTP message; or
if the identifier indicates that the PTP message is a delay measurement function message, sending the PTP message.

3. The method according to claim 1, wherein the processing the PTP message based on the identifier comprises:
if the identifier indicates that the PTP message is not a delay measurement function message, terminating the PTP message; or
if the identifier indicates that the PTP message is a delay measurement function message, performing delay measurement based on the PTP message.

4. The method according to claim 3, wherein the PTP message is a synchronization message that is involved in a delay request-response mechanism and comprises the identifier, and the performing delay measurement based on the PTP message comprises:
sending a first delay measurement request message in response to the PTP message, wherein the first delay measurement request message is a delay request message that is involved in the delay request-response mechanism and comprises the identifier;
obtaining a first delay measurement response message to the first delay measurement request message, wherein the first delay measurement response message is a delay response message that is involved in the delay request-response mechanism and comprises the identifier, and the first delay measurement response message comprises a timestamp of the first delay measurement request message; and
determining a link transmission delay between the first communication apparatus and the second communication apparatus based on a timestamp of the PTP message and/or the timestamp of the first delay measurement request message.

5. The method according to claim 4, wherein before the sending the first delay measurement request message in response to the PTP message, the method further comprises:
obtaining a delay measurement follow-up message for the PTP, wherein the delay measurement follow-up message is a follow-up message that is involved in the delay request-response mechanism and comprises the identifier, and the delay measurement follow-up message comprises the timestamp of the PTP message.

6. The method according to claim 3, wherein the PTP message is a delay request message that is involved in a peer-to-peer delay mechanism and comprises the identifier, and the performing delay measurement based on the PTP message comprises:
sending a second delay measurement response message in response to the PTP message, wherein the second delay measurement response message is a delay response message that is involved in the peer-to-peer delay mechanism and comprises the identifier.

7. The method according to claim 6, wherein after the sending the second delay measurement response message, the method comprises:
sending a delay measurement response follow-up message for the second delay measurement response message, wherein the delay measurement response follow-up message is a delay response follow-up message that is involved in the peer-to-peer delay mechanism and comprises the identifier, and the delay measurement response follow-up message comprises a timestamp of the second delay measurement response message.

8. The method according to any one of claims 1 to 7, wherein the PTP message comprises a domain number field, a message type field, and a flag field, and the identifier is located in any one of the domain number field, the message type field, or the flag field.

9. The method according to any one of claims 1 to 7, wherein the PTP message comprises a message type field and a plurality of timestamp fields, the identifier is located in the message type field, the plurality of timestamp fields correspond to different delay measurement function messages, and each timestamp field is used to store a timestamp of a corresponding delay measurement function message.

10. The method according to any one of claims 1 to 7, wherein the PTP message comprises a domain number field, a message type field, and a flag field, the identifier comprises a first sub-identifier and a second sub-identifier, and the first sub-identifier and the second sub-identifier are located in different ones of the domain number field, the message type field, and the flag field; and
if either the first sub-identifier or the second sub-identifier is located in the domain number field, the sub-identifier indicates whether the PTP message is a delay measurement function message;
if either the first sub-identifier or the second sub-identifier is located in the message type field, the sub-identifier indicates a message type of the PTP message and indicates that the PTP message is a delay measurement function message; or
if either the first sub-identifier or the second sub-identifier is located in the flag field, the sub-identifier indicates whether the PTP message is a delay measurement function message.

11. The method according to any one of claims 1 to 7, wherein the PTP message comprises a domain number field, a message type field, and a flag field, and the identifier comprises a first sub-identifier, a second sub-identifier, and a third sub-identifier;
the first sub-identifier is located in the domain number field, and the first sub-identifier indicates whether the PTP message is a delay measurement function message;
the second sub-identifier is located in the message type field, and the second sub-identifier indicates a message type of the PTP message and indicates that the PTP message is a delay measurement function message; and
the third sub-identifier is located in the flag field, and the third sub-identifier indicates whether the PTP message is a delay measurement function message.

12. The method according to any one of claims 1 to 7, wherein the PTP message comprises a delay measurement type length value TLV, and the identifier is located in a type field in the delay measurement TLV.

13. The method according to claim 12, wherein the delay measurement TLV is a reserved TLV or a vendor TLV supported by the PTP message.

14. The method according to any one of claims 8 to 13, wherein the identifier is a reserved value of the field in which the identifier is located.

15. A method for sending a precision time protocol PTP message, wherein the method is performed by a second communication apparatus, and the method comprises:
obtaining a PTP message, wherein the PTP message comprises an identifier, and the identifier indicates whether the PTP message is a delay measurement function message; and
sending the PTP message.

16. The method according to claim 15, wherein the identifier indicates that the PTP message is a delay measurement function message, the PTP message is a synchronization message that is involved in a delay request-response mechanism and comprises the identifier, and after the sending the PTP message, the method further comprises:
obtaining a first delay measurement request message for the PTP message, wherein the first delay measurement request message is a delay request message that is involved in the delay request-response mechanism and comprises the identifier; and
sending a second delay measurement response message in response to the first delay measurement request message, wherein the second delay measurement response message is a delay response message that is involved in the delay request-response mechanism and comprises the identifier.

17. The method according to claim 16, wherein after the sending the PTP message, the method further comprises:
sending a delay measurement follow-up message for the delay measurement synchronization message, wherein the delay measurement follow-up message is a follow-up message that is involved in the delay request-response mechanism and comprises the identifier.

18. The method according to claim 15, wherein the identifier indicates that the PTP message is a delay measurement function message, the PTP message is a delay request message that is involved in a peer-to-peer delay mechanism and comprises the identifier, and after the sending the PTP message, the method further comprises:
obtaining a second delay measurement response message for the PTP message, wherein the second delay measurement response message is a delay response message that is involved in the peer-to-peer delay mechanism and comprises the identifier; and
determining a link transmission delay between the first communication apparatus and the second communication apparatus based on a timestamp of the PTP message and/or a timestamp of the second delay measurement response message.

19. The method according to claim 18, wherein after the obtaining the second delay measurement response message for the PTP message, the method further comprises:
obtaining a delay measurement response follow-up message for the second delay measurement response message, wherein the delay measurement response follow-up message is a delay response follow-up message that is involved in the peer-to-peer delay mechanism and comprises the identifier, and the delay measurement response follow-up message comprises the timestamp of the second delay measurement response message.

20. The method according to any one of claims 15 to 19, wherein the PTP message comprises a domain number field, a message type field, and a flag field, and the identifier is located in any one of the domain number field, the message type field, or the flag field.

21. The method according to any one of claims 15 to 19, wherein the PTP message comprises a message type field and a plurality of timestamp fields, the identifier is located in the message type field, the plurality of timestamp fields correspond to different delay measurement function messages, and each timestamp field is used to store a timestamp of a corresponding delay measurement function message.

22. The method according to any one of claims 15 to 19, wherein the PTP message comprises a domain number field, a message type field, and a flag field, the identifier comprises a first sub-identifier and a second sub-identifier, and the first sub-identifier and the second sub-identifier are located in different ones of the domain number field, the message type field, and the flag field; and
if either the first sub-identifier or the second sub-identifier is located in the domain number field, the sub-identifier indicates whether the PTP message is a delay measurement function message;
if either the first sub-identifier or the second sub-identifier is located in the message type field, the sub-identifier indicates a message type of the PTP message and indicates that the PTP message is a delay measurement function message; or
if either the first sub-identifier or the second sub-identifier is located in the flag field, the sub-identifier indicates whether the PTP message is a delay measurement function message.

23. The method according to any one of claims 15 to 19, wherein the PTP message comprises a domain number field, a message type field, and a flag field, and the identifier comprises a first sub-identifier, a second sub-identifier, and a third sub-identifier;
the first sub-identifier is located in the domain number field, and the first sub-identifier indicates whether the PTP message is a delay measurement function message;
the second sub-identifier is located in the message type field, and the second sub-identifier indicates a message type of the PTP message and indicates that the PTP message is a delay measurement function message; and
the third sub-identifier is located in the flag field, and the third sub-identifier indicates whether the PTP message is a delay measurement function message.

24. The method according to any one of claims 15 to 19, wherein the PTP message comprises a delay measurement type length value TLV, and the identifier is located in a type field in the delay measurement TLV.

25. The method according to claim 24, wherein the delay measurement TLV is a reserved TLV or a vendor TLV supported by the PTP message.

26. The method according to any one of claims 20 to 25, wherein the identifier is a reserved value of the field in which the identifier is located.

27. A communication system, wherein the system comprises a first communication apparatus and a second communication apparatus;
the second communication apparatus is configured to send a PTP message, wherein the PTP message comprises an identifier, and the identifier indicates whether the PTP message is a delay measurement function message; and
the first communication apparatus is configured to: obtain the PTP message, and if the identifier indicates that the PTP message is a delay measurement function message, perform delay measurement based on the PTP message.

28. The system according to claim 27, wherein the PTP message is a synchronization message that is involved in a delay request-response mechanism and comprises the identifier;
the first communication apparatus is further configured to send a first delay measurement request message in response to the PTP message, wherein the first delay measurement request message is a delay request message that is involved in the delay request-response mechanism and comprises the identifier;
the second communication apparatus is further configured to: obtain the first delay measurement request message, and send a first delay measurement response message in response to the first delay measurement request message, wherein the first delay measurement response message is a delay response message that is involved in the delay request-response mechanism and comprises the identifier; and
the first communication apparatus is further configured to: obtain the second delay measurement response message, and determine a link transmission delay between the first communication apparatus and the second communication apparatus based on a timestamp of the PTP message and/or a timestamp of the first delay measurement response message.

29. The system according to claim 28, wherein
the second communication apparatus is further configured to send a delay measurement follow-up message for the PTP message, wherein the delay measurement follow-up message is a follow-up message that is involved in the delay request-response mechanism and comprises the identifier, and the delay measurement follow-up message comprises the timestamp of the PTP message.

30. The system according to claim 27, wherein the PTP message is a delay request message that is involved in a peer-to-peer delay mechanism and comprises the identifier;
the first communication apparatus is further configured to send a second delay measurement response message in response to the PTP message, wherein the second delay measurement response message is a delay response message that is involved in the peer-to-peer delay mechanism and comprises the identifier; and
the second communication apparatus is further configured to: obtain the second delay measurement response message, and determine a link transmission delay between the first communication apparatus and the second communication apparatus based on a timestamp of the PTP message and/or a timestamp of the second delay measurement response message.

31. The system according to claim 30, wherein
the first communication apparatus is further configured to send a delay measurement response follow-up message for the second delay measurement response message, wherein the delay measurement response follow-up message is a delay response follow-up message that is involved in the peer-to-peer delay mechanism and comprises the identifier, and the delay measurement response follow-up message comprises the timestamp of the second delay measurement response message.

32. The system according to claim 27, wherein the system further comprises a third communication apparatus;
the first communication apparatus is further configured to: if the identifier indicates that the PTP message is not a delay measurement function message, terminate the PTP message; if the identifier indicates that the PTP message is a delay measurement function message, send the PTP message; and
the third communication apparatus is configured to: obtain the PTP message, and perform the step of delay measurement based on the PTP message.

33. The system according to any one of claims 27 to 32, wherein the PTP message comprises a domain number field, a message type field, and a flag field, and the identifier is located in any one of the domain number field, the message type field, or the flag field.

34. The system according to any one of claims 27 to 32, wherein the PTP message comprises a message type field and a plurality of timestamp fields, the identifier is located in the message type field, the plurality of timestamp fields correspond to different delay measurement function messages, and each timestamp field is used to store a timestamp of a corresponding delay measurement function message.

35. The system according to any one of claims 27 to 32, wherein the PTP message comprises a domain number field, a message type field, and a flag field, the identifier comprises a first sub-identifier and a second sub-identifier, and the first sub-identifier and the second sub-identifier are located in different ones of the domain number field, the message type field, and the flag field; and
if either the first sub-identifier or the second sub-identifier is located in the domain number field, the sub-identifier indicates whether the PTP message is a delay measurement function message;
if either the first sub-identifier or the second sub-identifier is located in the message type field, the sub-identifier indicates a message type of the PTP message and indicates that the PTP message is a delay measurement function message; or
if either the first sub-identifier or the second sub-identifier is located in the flag field, the sub-identifier indicates whether the PTP message is a delay measurement function message.

36. The system according to any one of claims 27 to 32, wherein the PTP message comprises a domain number field, a message type field, and a flag field, and the identifier comprises a first sub-identifier, a second sub-identifier, and a third sub-identifier;
the first sub-identifier is located in the domain number field, and the first sub-identifier indicates whether the PTP message is a delay measurement function message;
the second sub-identifier is located in the message type field, and the second sub-identifier indicates a message type of the PTP message and indicates that the PTP message is a delay measurement function message; and
the third sub-identifier is located in the flag field, and the third sub-identifier indicates whether the PTP message is a delay measurement function message.

37. The system according to any one of claims 27 to 32, wherein the PTP message comprises a delay measurement type length value TLV, and the identifier is located in a type field in the delay measurement TLV.

38. The system according to claim 37, wherein the delay measurement TLV is a reserved TLV or a vendor TLV supported by the PTP message.

39. The system according to any one of claims 33 to 38, wherein the identifier is a reserved value of the field in which the identifier is located.

40. An apparatus for sending a precision time protocol PTP message, wherein the apparatus is configured to perform the method according to any one of claims 1 to 14.

41. An apparatus for sending a precision time protocol PTP message, wherein the apparatus is configured to perform the method according to any one of claims 15 to 26.

42. A communication device, wherein the communication device comprises a processor, and the processor is configured to execute program code, to cause the communication device to perform the method according to any one of claims 1 to 14 or the method according to any one of claims 15 to 26.

43. A computer-readable storage medium, wherein the storage medium stores at least one piece of program code, and the at least one piece of program code is read by a processor, to cause a communication device to perform the method according to any one of claims 1 to 14 or the method according to any one of claims 15 to 26.
